# EUROPÄISCHE PATENTSCHRIFT

(11) **EP 4 064 555 B1**
(45) Veröffentlichungstag und Bekanntmachung des Hinweises auf die Patenterteilung: **06.08.2025**
(21) Anmeldenummer: 22161152.8
(22) Anmeldetag: 09.03.2022
(51) Int. Cl.: H02P 23/04, H02P 9/10, H02P 23/00, H02P 25/022, H02P 29/60, F03D 7/02

(54) **WINDENERGIEANLAGE UND VERFAHREN ZUM STEUERN EINER WINDENERGIEANLAGE**
WIND TURBINE AND METHOD FOR CONTROLLING A WIND TURBINE
ÉOLIENNE ET PROCÉDÉ DE COMMANDE D'UNE ÉOLIENNE

(30) Priorität: 25.03.2021 DE 102021107555
(43) Veröffentlichungstag der Anmeldung: 28.09.2022
(73) Patentinhaber: Wobben Properties GmbH, 26607 Aurich (DE)
(72) Erfinder: Noffke, Nils, 26607 Aurich (DE); Krause, Uli, 26556 Westerholt (DE); Nietsch, Tilko, 26639 Wiesmoor (DE)
(74) Vertreter: Eisenführ Speiser

(56) Entgegenhaltungen:
- EP-A1- 3 686 409
- EP-B1- 3 754 179
- WO-A1-2020/178182
- DE-A1- 102016 106 590
- DE-A1- 102017 107 897
- DATABASE COMPENDEX [online] ENGINEERING INFORMATION, INC., NEW YORK, NY, US; 15 April 2019 (2019-04-15), ZHANG X ET AL: "Simulation of Air-Gap Noise of New Energy Automobile Motor", Database accession no. E20191906907553
- ZHANG X ET AL: "Simulation of Air-Gap Noise of New Energy Automobile Motor", IOP CONFERENCE SERIES: MATERIALS SCIENCE AND ENGINEERING - 2ND INTERNATIONAL SYMPOSIUM ON APPLICATION OF MATERIALS SCIENCE AND ENERGY MATERIALS, SAMSE 2018 - CHAPTER 6 ELECTRONIC AND ELECTRICAL ENGINEERING 20190415 INSTITUTE OF PHYSICS PUBLISHING GBR, vol. 490, no. 7, 17 December 2018 (2018-12-17), DOI: 10.1088/1757-899X/490/7/072027

## Beschreibung

Die vorliegende Erfindung betrifft eine Windenergieanlage und sie betrifft ein Verfahren zum Steuern einer Windenergieanlage.

Windenergieanlagen sind bekannt, sie erzeugen mit Hilfe eines Generators elektrischen Strom aus Wind. Die Rotation des Generators kann neben elektrischen Strom auch unerwünschte Geräusche erzeugen. Besonders kann der Generator Geräusche oder Töne abstrahlen die zu einer Tonhaltigkeit führen. Eine Tonhaltigkeit kann ein Geräusch sein, dass im Wesentlichen als monoton wahrgenommen wird. Meist kann eine solche Tonhaltigkeit durch einen gleichmäßig rotierenden Generator einer getriebelosen Windenergieanlage erzeugt werden und im Bereich einer mittleren bis tiefen Frequenz des hörbaren Spektrums liegen. Die Ursache kann in der Anregung einer mechanischen Schwingung durch magnetische Wechselwirkung zwischen Läufer und Stator des Generators liegen. Durch das Umlaufen des Läufers ändern sich auch ständig die wechselwirkenden Kräfte zwischen Läufer und Stator, wodurch die mechanische Anregung mit gleichmäßiger Frequenz entstehen kann.

Das Problem tritt besonders bei Generatoren getriebeloser Windenergieanlagen auf, weil diese sehr langsam laufen. Bei Windenergieanlage mit Getriebe drehen die Generatoren sehr viel schneller, was zum einen zu einem anderen Frequenzbereich führen würde, insbesondere aber generell zu einer signifikant geringeren Anregung mechanischer Schwingungen zwischen Läufer und Stator führt.

Die erzeugten Geräusche können an der Windenergieanlage und/oder an einem relevanten Immissionspunkt erfasst werden und wenn hierbei erkannt wurde, dass Grenzwerte für das erzeugte Geräusch überschritten wurden, so kann der Betrieb der Windenergieanlage entsprechend verändert werden. Insbesondere kann die Drehzahl verringert werden. Allerdings kann eine solche spontane Drehzahlreduzierung zu einem ungünstigen Betriebspunkt führen, wodurch ein nicht vorhergesehener und dabei meist ungünstiger Betriebspunkt entstehen kann.

Das Dokument DE 10 2016 106 590 A1 betrifft ein Verfahren zum Betreiben einer Windenergieanlage mit einem Rotor mit Rotorblättern (108) mit verstellbaren Blattwinkel. Das Dokument EP 3 686 409 A1 offenbart ein Verfahren zum Steuern einer Länge eines Luftspalts in einer elektrischen Maschine unter Verwendung einer Luftspaltsteuerung. Das Dokument DE 10 2017 107 897 A1 betrifft ein Verfahren zum Steuern einer getriebelosen Windenergieanlage

Der vorliegenden Erfindung liegt somit die Aufgabe zugrunde, zumindest eins der vorstehend genannten Probleme zu adressieren. Insbesondere soll eine Lösung geschaffen werden, die das Hervorrufen einer Tonhaltigkeit gezielt steuert, um die Tonhaltigkeit unter vorgegebenen Grenzen zu halten, wobei zudem möglichst ein guter Betriebspunkt erreicht werden kann. Zumindest soll zu bisher bekannten Lösungen eine alternative Lösung gefunden werden.

Erfindungsgemäß wird ein Verfahren gemäß Anspruch 1 vorgeschlagen. Das Verfahren geht von einer Windenergieanlage aus, die einen Generator zum Erzeugen elektrischen Stroms aufweist. Der Generator weist einen Luftspalt mit einer variablen Luftspaltdicke auf. Der Luftspalt ist zwischen Läufer und Stator des Generators ausgebildet. Der Luft-spalt weist besonders dadurch eine variable Luftspaltdicke auf, dass diese sich in Abhängigkeit von der Temperatur ändern kann.

Besonders ist hier ein Innenläufer vorgesehen, bei dem sich somit der Läufer in dem Stator dreht. Erwärmt sich hierbei der Stator, so kann er sich dadurch ausdehnen und im Vergleich zum Läufer vergrößern. Dadurch vergrößert sich die Luftspaltdicke.

Die Windenergieanlage wird in einem Teillastbereich mittels einer Steuervorschrift gesteuert. Überhaupt betrifft das Verfahren den Betrieb der Windenergieanlage und damit des Generators im Teillastbereich. Der Teillastbereich kann als der Bereich definiert werden, in dem die Windgeschwindigkeit unterhalb einer Nennwindgeschwindigkeit liegt.

In diesem Teillastbereich wird die Windenergieanlage somit mittels einer Steuervorschrift gesteuert. Eine Steuervorschrift ist insbesondere eine Vorschrift, bei der in Abhängigkeit von einer Eingangsgröße, zum Beispiel der Drehzahl, eine Ausgangsgröße eingestellt wird, insbesondere Leistung oder Drehmoment des Generators.

Dazu wird vorgeschlagen, dass in Abhängigkeit von der Luftspaltdicke die Steuervor-schrift ausgewählt oder eingestellt wird. Dabei kann auch eine Veränderung der Form des Luftspalts auftreten, wenn sich nämlich eine nicht symmetrische Verformung ergibt. Die Form kann sich sowohl in Umfangsrichtung als auch in der Tiefe ändern. Die Steuervor-schrift gibt also einen Zusammenhang zwischen einer Eingangsgröße und einer Ausgangsgröße an und dieser Zusammenhang wird in Abhängigkeit von der Luftspaltdicke ausgewählt oder eingestellt. Der Zusammenhang kann beispielsweise als Funktion mit wenigstens einem Funktionsparameter vorgegeben werden, zum Beispiel durch eine Polynomfunktion, und wenigstens ein Parameter dieser Funktion kann eingestellt werden. Es kann aber auch eine Kennlinie verwendet werden, wobei diese Kennlinie aus vielen vorher berechneten Kennlinien ausgewählt werden kann. Dieses Auswählen der Kennlinie kann auch als ein Einstellen der Steuervorschrift verstanden werden. Die Steuervorschrift wird dann also durch diese Auswahl eingestellt.

Hier wurde besonders erkannt, dass die Luftspaltdicke einen durch den Generator erzeugten Geräuschpegel beeinflussen kann. Ist dieser Geräuschpegel zu hoch, kann ein Betriebspunkt der Windenergieanlage entsprechend verändert werden. Hier wird auch vorgeschlagen, dass diese Veränderung dadurch erfolgt, dass nicht lediglich der aktuelle Betriebspunkt verändert wird, sondern dass die Steuervorschrift verändert wird. Durch die Anwendung der geänderten Steuervorschrift kann dann der Betriebspunkt gezielt oder zumindest zielgerichteter geändert werden.

Hier wurde besonders erkannt, dass eine Steuervorschrift so vorgegeben wird, dass sie jeweils zu guten Betriebspunkten führt. Die Steuervorschrift kann dafür vorab entwickelt und getestet werden, zum Beispiel durch entsprechende Simulationen. Insbesondere können diese unterschiedlichen Steuervorschriften bzw. unterschiedlich einstellbaren Steuervorschriften, jeweils im Vorfeld entwickelt werden um jeweils zu guten Betriebspunkten zu führen.

Insbesondere wird ein gut geeigneter Betriebspunkt gefunden. Weiterhin ist zu beachten, dass die Windgeschwindigkeit sich ständig ändern kann. Durch die Wahl oder Einstellung der Steuervorschrift in Abhängigkeit von der Luftspaltdicke kann das gut berücksichtigt werden. Änderungen der Windgeschwindigkeit werden dann nämlich dadurch berücksichtigt, dass die Windenergieanlage entsprechend mittels der Steuervorschrift gesteuert wird. Eine geänderte Windgeschwindigkeit führt also zu einem anderen Betriebspunkt und dieser kann mittels der Steuervorschrift eingestellt werden. Ein so geänderter Betriebspunkt ist damit dann ebenfalls in Abhängigkeit von der Luftspaltdicke eingestellt worden.

Hier liegt besonders die Erkenntnis zugrunde, dass ein Generator bei kleinerer Luftspaltdicke stärker mechanische Schwingungen anregen kann, als bei größerer bzw. großer Luftspaltdicke. Ist die Luftspaltdicke also klein, kann das Vorgeben einer geringeren Drehzahl sinnvoller sein, als wenn die Luftspaltdicke groß oder zumindest größer wäre.

Durch das Vorgeben der Steuervorschrift in Abhängigkeit von der Luftspaltdicke wird dieses Phänomen somit dauerhaft berücksichtigt. Gleichzeitig ist ein aerodynamischer Betriebspunkt durch eine entsprechende Steuervorschrift erreichbar. Etwas vereinfacht ausgedrückt kann durch eine solche Steuervorschrift beispielsweise auch erreicht werden, dass die Drehzahl bei kleiner Luftspaltdicke generell etwas kleiner gewählt wird, als bei großer oder größerer Luftspaltdicke. Wird eine Betriebskennlinie verwendet, die unten noch beschrieben wird, kann dies einer Verschiebung der Betriebskennlinie entsprechen.

Hier wurde auch erkannt, dass eine bestimmte Tonhaltigkeit, die als besonderes Problem identifiziert wurde, zwar von der Drehzahl abhängen kann, dass es aber nicht bedeuten muss, dass eine entsprechende Drehzahl immer zu vermeiden wäre. Vielmehr kommt es auf das Zusammenspiel diverser Größen an.

Exemplarisch ist besonders darauf hinzuweisen, dass eine höhere Windgeschwindigkeit auch dazu führt, dass der Wind selbst zu einer höheren Geräuschentwicklung führt. Dadurch kann noch eine Tonhaltigkeit schwächer wahrgenommen werden, sodass sie gegebenenfalls auch lauter ausfallen darf.

Andererseits führt aber auch eine verringerte Leistung zu schwächeren Kräften im Generator, also zu schwächeren Kräften zwischen Läufer und Stator. Dadurch wird die Anregung mechanischer Schwingungen ebenfalls verringert. Die mechanischen Schwingungen sind also verringert und damit auch der resultierende Geräuschpegel.

Vorzugsweise wird vorgeschlagen, dass bei Abnahme der Luftspaltdicke die Steuervorschrift so verändert wird, dass sich die Leistung verringert. Wenn die Steuervorschrift das Einstellen der Leistung in Abhängigkeit von einer Drehzahl vorsieht, wird somit vorzugsweise vorgeschlagen, bei Abnahme der Luftspaltdicke die Leistung bei gleicher Drehzahl zu verringern. Eine Kennlinie, bei der die Leistung über die Drehzahl aufgetragen ist, würde also flacher, bzw. nach rechts verschoben werden.

Erfindungsgemäß wird vorgeschlagen, dass die Steuervorschrift eine Betriebskennliniensteuerung umfasst, bei der die einzustellende Generatorzustandsgröße mittels einer Betriebskennlinie eingestellt wird, wobei die Betriebskennlinie einen Zusammenhang zwischen einer erfassten Drehzahl und der einzustellenden Generatorzustandsgröße vorgibt, und zum Auswählen oder Einstellen der Steuervorschrift eine Betriebskennlinie ausgewählt oder verändert wird.

Als einzustellende Generatorzustandsgröße ist insbesondere eine Generatorleistung oder ein Generatormoment vorgesehen. Im ersten Fall ergibt sich dann eine Drehzahl-Leistungs-Kennlinie als Betriebskennlinie, wohingegen sich im zweiten Fall eine Drehzahl-Drehmoment-Kennlinie als Betriebskennlinie ergibt.

Das Steuern der Windenergieanlage mittels einer Drehzahl-Leistungs-Kennlinie - gleiches ergibt sich sinngemäß für die Verwendung einer Drehzahl-Drehmoment-Kennlinie - kann wie folgt erläutert werden. Die Kennlinie, also die Betriebskennlinie, kann durch eine Vielzahl von Wertepaaren oder auch durch einen Funktionsalgorithmus vorgegeben sein. Die Betriebskennlinie beschreibt dann einen Zusammenhang zwischen einer erfassten Drehzahl und einer dazu einzustellenden Abgabeleistung des Generators. Alternativ kann hier übrigens auch die Abgabeleistung der Windenergieanlage insgesamt verwendet werden. Erhöht sich beispielsweise die Windgeschwindigkeit, so bringt der Wind mehr Leistung ein, was zu einer Erhöhung der Drehzahl führt. Es wird dann gemäß der Betriebskennlinie ein neuer, nämlich höherer Leistungswert eingestellt. Entspricht dieser der durch den Wind eingetragenen Leistung, ergibt sich ein stabiler Betriebspunkt. Entspricht diese Leistung noch nicht der durch den Wind eingebrachten Leistung, so erhöht sich die Drehzahl weiter und führt gemäß der Betriebskennlinie zu einem neuen, nämlich einen höheren Wert für die einzustellende Leistung. Diese Veränderung der Leistung wird solange durchgeführt, bis sich ein stabiler Betriebspunkt und damit eine feste Drehzahl ergibt.

Wird nun in Abhängigkeit von der Luftspaltdicke die Betriebskennlinie ausgewählt bzw. verändert, so kann die Luftspaltdicke für den gesamten Drehzahlbereich dadurch berücksichtigt werden.

Durch die Betriebskennlinie kann somit ein genereller Zusammenhang zwischen Drehzahl und Leistung bzw. entsprechend zwischen Drehzahl und Drehmoment vorgegeben werden, der die Luftspaltdicke berücksichtigt und dadurch die Geräuschentwicklung, also insbesondere einen Geräuschpegel bzw. Schalldruckpegel mitberücksichtigen kann. Diese Berücksichtigung erfolgt somit nicht nur für den aktuellen bzw. aktuell veränderten Betriebspunkt, sondern für alle Betriebspunkte.

Die Verwendung einer geeigneten Betriebskennlinie kann auch eine weitere Veränderung der Luftspaltdicke besonders in Abhängigkeit der Drehzahl antizipieren.

Besonders kann die Luftspaltdicke von einer Temperatur des Generators abhängen, was unten noch weiter beschrieben wird. Steigt die Drehzahl nun an, ist über die Betriebskennlinie die zugehörige Leistungsabgabe bzw. das zugehörige Drehmoment bekannt und daraus ist auch die Wärmeerzeugung im Stator bekannt. Die Wärmeerzeugung im Stator kann ein wesentlicher Grund für die Temperatur oder zumindest eine Temperaturveränderung des Generators sein. Die gewählte Betriebskennlinie kann also berücksichtigen, dass sich die Temperatur des Generators erhöhen würde, sollte die Windgeschwindigkeit und somit die Drehzahl steigen. Dann kann entsprechend eine weitere Vergrößerung der Luftspaltdicke antizipiert werden und das Ergebnis, nämlich eine Verringerung des erzeugten Geräuschpegels bzw. Schalldruckpegels, kann bereits in der Betriebskennlinie berücksichtigt sein.

Gemäß einem Aspekt wird vorgeschlagen, dass zum Steuern der Windenergieanlage in Abhängigkeit von der Luftspaltdicke, insbesondere zum Auswählen oder Einstellen der Steuervorschrift in Abhängigkeit von der Luftspaltdicke, die Luftspaltdicke mittels Sensoren erfasst wird. Hier kommen besonders Abstandssensoren in Betracht, die an ausgewählten Stellen in oder neben dem Luftspalt angeordnet sein können.

Außerdem oder alternativ wird vorgeschlagen, dass die Luftspaltdicke aus wenigstens einer erfassten Temperatur oder Temperaturverteilung geschätzt wird. Hier kann die Temperatur des Stators gemessen werden und des Läufers, um die Ausdehnung dieser beiden Elemente aus der Temperatur abzuleiten und daraus auf die Luftspaltdicke zu schließen. Solche Zusammenhänge können empirisch ermittelt werden, oder in Simulationen ermittelt werden. Besonders bei einem permanent erregten Synchrongenerator, der als Innenläufer ausgebildet ist, ist mit wenig Temperaturschwankung des Läufers zu rechnen, zumindest im Vergleich zum Stator, und damit mit wenig Größenveränderung. Dann kann das Erfassen der Temperatur des Stators ausreichend sein. Es kann dann die resultierende Größenveränderung des Stators und damit der Veränderung der Luftspalt-dicke abgeleitet werden. Dieser Überlegung liegt bereits eine zu erwartende Verteilung der Temperatur zu Grunde. Es kommt aber auch in Betrachte, eine Temperaturverteilung zu erfassen.

Eine Kombination der Erfassung und Schätzung der Luftspaltdicke kommt auch in Betracht, bei der die erfasste Temperatur ergänzend herangezogen werden kann. Es kommt auch ein adaptives Verfahren in Betracht, bei dem die Luftspaltdicke mittels Sensoren erfasst und entsprechend erfassten Temperaturen zugeordnet wird. Dadurch kann dann aus der erfassten Temperatur die Luftspaltdicke abgeleitet werden. Hier wird insbesondere ein lernendes Verfahren vorgeschlagen, bei dem Zusammenhänge zwischen erfasster Temperatur und Luftspaltdicke nach und nach im laufenden Betrieb aufgenommen werden. Darauf basierend kann auch eine spätere Überprüfung stattfinden, demnach Messwerte der Sensoren zur Erfassung der Luftspaltdicke anhand der erfassten Temperatur auf Plausibilität überprüft werden, um einen Sensorfehler auszuschließen.

Außerdem oder alternativ wird vorgeschlagen, dass die Luftspaltdicke aus wenigstens einem radialen Beschleunigungswert geschätzt wird. Besonders kann hier die Wechselwirkung zwischen Läufer und Stator bei der Drehung des Läufers zu einer oben bereits beschriebenen mechanischen Anregung besonders des Stators führen. Diese mechanische Anregung ist insbesondere eine Bewegung in radialer Richtung. Mit anderen Worten wird der Stator bei der Drehung des Läufers durch magnetische Kräfte ständig wechselnd zum Läufer hingezogen und von ihm wieder abgestoßen. Diese Kraftrichtung ist ebenfalls im Wesentlichen in radiale Richtung gerichtet und diese ständig wechselnde Bewegung beinhaltet somit auch eine Beschleunigung in radialer Richtung. Diese Beschleunigung kann erfasst werden und daraus kann die Luftspaltdicke abgeleitet werden.

Auch hier können solche Zusammenhänge in Simulationen oder Vorrichtungen mit entsprechender Messsensorik ermittelt werden. Auch hier kann ein adaptives bzw. lernendes Verfahren in Betracht kommen. Selbst eine Kombination mit Sensoren, die die Luftspaltdicke unmittelbar erfassen, kommt in Betracht. Die Kombination kann so ausgestaltet werden, wie für die Kombination zwischen Erfassung der Luftspaltdicke mittels Sensoren und Abschätzung aus der erfassten Temperatur erläutert wurde.

Eine Kombination der Schätzung über die erfasste Temperatur und den radialen Beschleunigungswert kann beispielsweise durch eine Mittelwertbildung oder durch eine andere Gewichtung vorgenommen werden. Es kann also die Luftspaltdicke aus der erfassten Temperatur geschätzt werden, außerdem aus der radialen Beschleunigung, und aus den so geschätzten Werten der Luftspaltdicke kann ein Mittelwert gebildet werden.

Außerdem oder alternativ kommt in Betracht, dass die Luftspaltdicke indirekt über die Luftspaltdicke beeinflussender Parameter berücksichtigt wird. Solche Parameter können besonders die abgegebene Leistung, das eingestellte Drehmoment oder eine Stator-spannung sein. Solche Parameter charakterisieren den Betrieb des Generators und damit auch seine Belastung. Die Belastung wiederrum kann die Temperatur beeinflussen und dadurch kann die Luftspaltdicke beeinflusst werden. Eine indirekte Berücksichtigung bezeichnet den Vorschlag, dass in Abhängigkeit solcher Parameter bereits unmittelbar die Auswahl oder das Einstellen der Steuervorschrift erfolgt. Insbesondere kann davon abhängig die Betriebskennlinie ausgewählt werden. Die Luftspaltdicke wird dabei indirekt berücksichtigt, weil sie der zugrundeliegende Grund für die Anpassung der Steuervor-schrift ist, ohne dass sie aber unmittelbar als Größe einfließen muss.

Hier liegt besonders die Erkenntnis zugrunde, dass aus Untersuchungen, sei es im laufenden Betrieb und/oder Simulationen, Zusammenhänge zwischen beeinflussenden Parametern und der Luftspaltdicke erfasst wurden, abhängig von der Luftspaltdicke die Steuervorschrift angepasst wird und diese zweischrittige Abhängigkeit vereinfacht werden kann, indem die Steuervorschrift unmittelbar in Abhängigkeit von den die Luftspaltdicke beeinflussenden Parametern eingestellt wird.

Besonders die erfasste Temperatur und/oder der radiale Beschleunigungswert können solche die Luftspaltdicke beeinflussende Parameter sein. Die Steuervorschrift, insbesondere die Betriebskennlinie, kann dann unmittelbar in Abhängigkeit von der erfassten Temperatur und/oder von der radialen Beschleunigung ausgewählt oder eingestellt werden. Dadurch erfolgt ein Auswählen oder Einstellen indirekt in Abhängigkeit von der Luftspaltdicke.

Gemäß einem Aspekt wird vorgeschlagen, dass die einzustellende Generatorzustandsgröße eine Abgabeleistung, einen Generatormoment oder eine Zwischenkreis-spannung eines den generatorsteuernden Wechselrichter umfasst oder ist. Insbesondere wird vorgeschlagen, dass diese Generatorzustandsgröße mittels einer Betriebskennlinie in Abhängigkeit von der erfassten Drehzahl eingestellt wird. Die einzustellende Generatorzutandsgröße ist eine Zustandsgröße, die die Steuervorschrift einstellt. Hierüber kann auch die Interaktion zwischen Läufer und Stator beeinflusst werden, was das Anregen der mechanischen Schwingung ebenfalls beeinflusst und damit Einfluss auf die Geräuscherzeugung und Abgabe des Generators hat.

Hierbei wird über die Abgabeleistung auch der Statorstrom beeinflusst und damit die magnetische Interaktion zwischen Läufer und Stator. Über das Generatormoment wird unmittelbar die magnetische Interaktion zwischen Läufer und Rotor beeinflusst.

Die Zwischenkreisspannung kann besonders bei einem passiven Gleichrichter den Statorstrom und damit auch die magnetische Interaktion zwischen Läufer und Stator beeinflussen. Bei Verwendung eines Wechselrichters bei passivem Gleichrichter ergibt sich der Statorstrom, außer natürlich durch die Drehung des Läufers und Einstellung des Läufers, durch die statorseitige Beschaltung. Hier ist im Falle des passiven Gleichrichters dieser zwischen Statorklemmen und Gleichspannungszwischenkreis angeordnet. Je geringer die Spannung im Gleichspannungszwischenkreis ist, umso größer das Spannungsgefälle und damit der resultierende Statorstrom. Somit kann in diesem Fall eine Steuerung des Statorstroms über eine Drehzahl-Zwischenkreisspannungs-Kennlinie vorgegeben werden. Auch dies kann eine Betriebskennlinie bilden.

All diese drei Generatorzustandsgrößen werden vorzugsweise in Abhängigkeit von der erfassten Drehzahl eingestellt. Die Drehzahl ist, was hier erkannt wurde, eine wesentliche Größe für die Geräuscherzeugung, sowohl hinsichtlich Amplitude als auch hinsichtlich Frequenz. Die Generatorzustandsgröße beeinflusst die Geräuschentwicklung ebenfalls, wie oben erläutert wurde. Somit wird vorgeschlagen diese beiden Größen, also die Drehzahl einerseits und die Generatorzustandsgröße andererseits, aufeinander abzustimmen. Mit anderen Worten kann einer zu starken Geräuschentwicklung bedingt durch die Drehzahl durch Einstellung der Generatorzustandsgröße entgegengewirkt werden. Führt die Drehzahl zu einer geringen Geräuschentwicklung, die noch unter vorgegebenen Grenzen liegt, so kann der Generator ebenfalls durch entsprechende Einstellung der Generatorzustandsgrößen noch stärker ausgelastet, also ausgereizt werden.

Gemäß einem Aspekt wird vorgeschlagen, dass die Windenergieanlage als getriebelose Windenergieanlage ausgebildet ist. Hier wurde besonders erkannt, dass eine getriebelose Windenergieanlage einen langsam laufenden Generator aufweist, insbesondere einen Ringgenerator, bei dem sich die magnetisch wirksamen Elemente in einem ringförmigen Bereich befinden, der wenigstens, auf den Radius bezogen, in der äußeren Hälfte, insbesondere den äußeren 70 % des Generators angeordnet ist. Bei einem solchen Ringgenerator bzw. insgesamt bei einer solchen Situation einer getriebelosen Windenergieanlage, wurde erkannt, dass nicht nur die Geräuschentwicklung mit diesem Typ der Windenergieanlage bzw. diesem Generatortyp zusammenhängt, sondern dass hier auch eine Berücksichtigung der variierenden Luftspaltdicke Vorteile bringen kann.

Außerdem oder alternativ ist der Generator als permanent erregter Synchrongenerator ausgebildet. Hier wurde besonders erkannt, dass durch die Permanenterregung, nämlich des Läufers, dieser kaum einer Temperaturentwicklung durch Betrieb bzw. Belastung des Generators ausgesetzt ist. Der Stator ist aber einer solchen betriebsbedingten Belastung ausgesetzt und er schwankt dadurch viel stärker in seiner Temperatur und damit auch seiner Ausdehnung. Besonders weil dieser Unterschied zwischen Läufer und Stator besteht, kann sich der Luftspalt durch diese Temperaturschwankungen des Stators verändern. Das wurde erkannt und berücksichtigt.

Außerdem oder alternativ wird vorgeschlagen, dass der Generator als Innenläufer ausgebildet ist. Besonders in Kombination mit dem permanent erregten Synchrongenerator führt dies dazu, dass der Stator außen liegt und sich stärker erwärmt, als der innenliegende Läufer, sodass eine temperaturbedingte Ausdehnung des Stators zu einer Vergrößerung des Luftspalts führt. Dieses Verhalten kann berücksichtigt werden, besonders dann, wenn eine indirekte Berücksichtigung der Luftspaltdicke dadurch erfolgt, dass die Steuervorschrift in Abhängigkeit von der erfassten Generatortemperatur ausgewählt oder eingestellt wird. Dann wird nämlich berücksichtigt, dass die Luftspaltdicke umso größer ist, die Geräuschentwicklung damit umso kleiner ist, je höher die Temperatur des Generators ist.

Gemäß einem Aspekt wird vorgeschlagen, dass die Steuervorschrift eine Drehzahlvermeidungssteuerung beinhaltet, um die Windenergieanlage so zu steuern, dass ein Betrieb der Windenergieanlage in einen Drehzahlvermeidungsbereich vermieden wird. Der Drehzahlvermeidungsbereich definiert einen Drehzahlbereich, in dem das Betreiben einer Windenergieanlage vermieden werden soll, und die Drehzahlvermeidungssteuerung in Abhängigkeit von der Luftspaltdicke ausgewählt oder eingestellt wird. Es kann also eine Drehzahlvermeidungssteuerung ausgewählt und dadurch dann der Steuervorschrift zugeordnet werden. Die Steuervorschrift kann auch die Drehzahlvermeidungssteuerung bereits beinhalten und die so vorhandene Drehzahlvermeidungssteuerung in Abhängigkeit von der Luftspaltdicke einstellen.

Außerdem oder alternativ wird die Steuervorschrift so ausgewählt oder eingestellt, dass die Drehzahlvermeidungssteuerung in Abhängigkeit von der Luftspaltdicke ausgewählt o-der eingestellt wird. Hier ist also die Drehzahlvermeidungssteuerung fester Bestandteil der Steuervorschrift bzw. fester Bestandteil vieler Steuervorschriften, aus denen ausgewählt werden kann. Mit Auswahl der Steuervorschrift wird dann gleichzeitig die entsprechende Drehzahlvermeidungssteuerung mit ausgewählt. Ähnliches gilt, wenn die Steuer-vorschrift eingestellt wird, also insbesondere Parameter der Steuervorschrift verändert werden, dann kann damit auch die Drehzahlvermeidungssteuerung eingestellt werden.

Das Auswählen einer Drehzahlvermeidungssteuerung, sei es direkt oder indirekt, bedeutet besonders, dass die Drehzahlvermeidungssteuerung ergänzt oder aktiviert wird. Das Einstellen der Drehzahlvermeidungssteuerung kann besonders bedeuten, dass der Drehzahlbereich, der zu vermeiden ist, eingestellt wird. Hier kommt besonders in Betracht, dass bei großer Luftspaltdicke, wenn also von wenig Tonhaltigkeit auszugehen ist, wenn also ein schwacher Geräuschpegel zu erwarten ist, der Drehzahlvermeidungsbereich enger gewählt wird. Anderenfalls kann er breiter gewählt werden

Gemäß weiteren Aspekten wird vorgeschlagen, dass das Auswählen der Drehzahlvermeidungssteuerung ein Aktivieren oder Deaktivieren einer Drehzahlvermeidungssteuerung beinhaltet. Das Auswählen der Drehzahlvermeidungssteuerung kann außerdem oder alternativ beinhalten, eine Größe des Drehzahlvermeidungsbereichs, und es kann außerdem oder alternativ beinhalten, den Drehzahlvermeidungsbereich zu verschieben, sodass ein Zentrum oder mittlere Drehzahl des Drehzahlbereichs verändert wird.

Die Drehzahlvermeidungssteuerung kann auch dadurch aktiviert werden, dass sie immer vorhanden ist, aber beispielsweise durch Ändern eines multiplizierenden Parameters von 0 auf einen anderen Wert, insbesondere 1, aktiviert wird.

Gemäß einem Aspekt wird vorgeschlagen, dass die Drehzahlvermeidungssteuerung die Windenergieanlage so steuert, dass der Drehzahlvermeidungsbereich bei abfallendem o-der ansteigendem Wind, also abfallender oder ansteigender Windgeschwindigkeit, schnell durchfahren wird, um einen Betriebspunkt mit einer Drehzahl unterhalb bzw. oberhalb des Drehzahlvermeidungsbereich einzustellen. Das kann besonders so erfolgen, dass bei abfallendem Wind die Drehzahl abfällt, sie also von oben an den Vermeidungsbereich herankommt. Erreicht sie den Drehzahlvermeidungsbereich, kann die Zustandsgröße, also insbesondere Abgabeleistung oder Drehmoment des Generators, so verändert werden, bei den beiden Beispielen insbesondere verringert werden, dass die Drehzahl nicht weiter abfällt. Erst wenn die Generatorzustandsgröße einen vorbestimmten Wert erreicht hat, also gemäß den beiden Beispielen die Generatorleistung oder das Generatormoment auf einen entsprechenden Wert abgefallen sind, kann diese Größe dann verändert, nämlich bei den beiden Beispielen erhöht werden. Das erfolgt so, dass dann die Drehzahl sehr schnell weiter abfällt, und den unteren Drehzahlvermeidungsbereich erreicht oder noch weiter abfällt.

Bei ansteigender Windgeschwindigkeit und damit ansteigender Drehzahl, wenn also der Betriebspunkt von unten kommt, also von geringeren Drehzahlen, kann sinngemäß verfahren werden. Die Zustandsgröße kann dann bei Erreichen der unteren Grenze des Drehzahlvermeidungsbereichs entsprechend verändert werden. Im Falle der Generatorleistung oder des Generatormomentes erfolgt also eine Erhöhung, wodurch ein weiterer Anstieg der Drehzahl vermieden wird. Das Einstellen der Drehzahlvermeidungssteuerung kann insbesondere auch so erfolgen, dass eine Verstärkung des Ansteigens oder Abfallens der Generatorzustandsgröße beim Erreichen des Drehzahlvermeidungsbereichs entsprechend eingestellt wird. Wird die Verstärkung auf 0 eingestellt, ist die Drehzahlvermeidungssteuerung inaktiv.

Gemäß einem Aspekt wird vorgeschlagen, dass die Steuervorschrift mit abnehmender Luftspaltdicke so neu gewählt oder eingestellt wird, dass die Abgabeleistung verringert wird, das Generatormoment verringert wird, und/oder die Gleichspannungszwischenkreisspannung erhöht wird. Alle drei Maßnahmen führen jeweils zu einer Verringerung der magnetischen Kräfte im Luftspalt zwischen Läufer und Stator. Dabei kann die Abgabe-leistung, das Generatormoment oder die Gleichspannungszwischenkreisspannung die einzustellende Generatorzustandsgröße bilden. Die Steuervorschrift kann beispielsweise als Betriebskennliniensteuerung mit einer entsprechenden Betriebskennlinie ausgebildet sein und das neu Auswählen oder Einstellen der Steuervorschrift kann so ausgeführt werden, dass die Betriebskennlinie verschoben wird. Der aktuelle Betriebspunkt verändert sich dadurch ebenfalls, nämlich so dass die Abgabeleistung oder das Generatormoment verringert oder die Gleichspannungszwischenkreisspannung erhöht wird.

Außerdem oder alternativ wird vorgeschlagen, dass mit abnehmender Luftspaltdicke die Drehzahlvermeidungssteuerung aktiviert wird, oder so eingestellt wird, dass ein Betrieb der Windenergieanlage in einem Drehzahlvermeidungsbereich vermieden wird. Auch durch das Aktivieren oder entsprechendes Einstellen wird die Steuervorschrift verändert. Statt bei einer bestimmten Drehzahl die magnetischen Kräfte im Luftspalt zu verringern, oder ergänzend dazu, wird ein entsprechend kritischer Drehzahlbereich vermieden.

Es kommt auch in Betracht, dass mit abnehmender Luftspaltdicke die Drehzahlvermeidungssteuerung so eingestellt wird, dass sich der Drehzahlvermeidungsbereich vergrößert. Hier liegt besonders die Erkenntnis zugrunde, dass bei einer kritischen Drehzahl eine Geräuschentwicklung, insbesondere eine Tonhaltigkeit am stärksten ist. Bereits in der Nähe einer solchen kritischen Drehzahl kann eine zu starke Geräuschentwicklung auftreten. Dabei wurde erkannt, dass eine reduzierte Luftspaltdicke zu einer generell erhöhten Geräuschentwicklung führt und daher vorzugsweise die kritische Drehzahl mit entsprechend größerem Abstand vermieden wird. Das wird durch die Vergrößerung des Drehzahlvermeidungsbereichs erreicht. Die Verstellung der Drehzahlvermeidungssteuerung kann dabei so erfolgen, dass entsprechende obere und untere Drehzahlgrenzen eingestellt werden. Insbesondere kann der Drehzahlvermeidungsbereich durch eine obere und eine untere Grenzdrehzahl definiert werden und diese beiden Werte können durch das Einstellen der Drehzahlvermeidungssteuerung verändert werden.

Es kommt auch in Betracht, dass mit abnehmender Luftspaltdicke der Drehzahlvermeidungsbereich so eingestellt wird, dass er sich in Richtung zu einer höheren oder niedrigeren Drehzahl verschiebt. Das wird besonders vorgeschlagen, weil erkannt wurde, dass die Veränderung der Luftspaltdicke die Frequenz der Tonhaltigkeit verändern kann. Diese Frequenz kann sich bei abnehmender Luftspaltdicke sowohl erhöhen, als auch verringern, was durch die Verschiebung des Drehzahlvermeidungsbreichs berücksichtigt werden kann.

Das Einstellen kann auch durch eine drehzahlabhängige Verstärkung als Zusammenhang zwischen Drehzahl und einzustellender Generatorzustandsgröße vorgenommen werden. Diese Verstärkung kann dann mit abnehmender Luftspaltdicke für Drehzahlen unterhalb des Drehzahlvermeidungsbereichs bzw. unterhalb einer in dem Drehzahlvermeidungsbereich liegenden kritischen Drehzahl erhöht werden. Für Drehzahlen oberhalb des Drehzahlvermeidungsbereichs oder oberhalb der kritischen Drehzahl kann die Verstärkung mit abnehmender Luftspaltdicke verringert werden. Beides gilt jedenfalls, wenn die Generatorzustandsgröße eine Generatorleistung oder ein Generatormoment ist. Wenn die Generatorzustandsgröße die Gleichspannungszwischenkreisspannung ist, die auch vereinfachend als Zwischenkreisspannung bezeichnet werden kann, wäre es umgekehrt.

Gemäß einem Aspekt wird vorgeschlagen, dass die Steuervorschrift in Abhängigkeit von einer erfassten und/oder geschätzten Luftspaltdicke und/oder in Abhängigkeit einer Generatortemperatur ausgewählt oder eingestellt wird, und dass sie zusätzlich in Abhängigkeit von wenigstens einer Randbedingung ausgewählt oder eingestellt wird.

Die Steuervorschrift wird also in Abhängigkeit von der Luftspaltdicke und in Abhängigkeit von wenigstens einer Randbedingung eingestellt. Die Luftspaltdicke kann dabei unmittelbar erfasst werden, zum Beispiel durch Sensoren, und/oder anderweitig geschätzt werden, wie oben bereits ausgeführt wurde.

Die Luftspaltdicke kann auch dadurch berücksichtigt werden, dass die Steuervorschrift in Abhängigkeit von einer Generatortemperatur ausgewählt oder eingestellt wird. Die Generatortemperatur beeinflusst die Luftspaltdicke und basierend auf einem festgestellten Zusammenhang zwischen Luftspaltdicke und Generatortemperatur kann die Steuervor-schrift unmittelbar in Abhängigkeit von der Generatortemperatur ausgewählt oder eingestellt werden. Es braucht also nicht der Umweg gegangen zu werden, dass aus der Generatortemperatur zunächst die Luftspaltdicke geschätzt wird und dann in Abhängigkeit von dieser geschätzten Luftspaltdicke die Steuervorschrift ausgewählt oder eingestellt wird.

Zusätzlich wird wenigstens eine Randbedingung als Kriterium berücksichtigt. Insbesondere werden wenigstens zwei oder wenigstens drei Randbedingungen berücksichtigt.

Als Randbedingung kommt eine Luftdichte in Betracht, die insbesondere die Geräuschausbreitung beeinflusst. Hier wurde besonders erkannt, dass es nicht unbedingt darauf ankommt, was für ein Geräuschpegel am Generator vorliegt, sondern welcher Geräuschpegel bzw. Schalldruckpegel, also insbesondere welche Tonhaltigkeit, an einem Immissionspunkt vorliegt. Mit anderen Worten darf der Generator etwas lauter sein, wenn das Geräusch aber schwächer übertragen wird.

Auch ein Luftdruck und eine Luftfeuchtigkeit können besonders die Ausbreitung des Schalls beeinflussen und können daher als Randbedingung berücksichtig werden.

Außerdem kommt sowohl für Luftdichte, Luftdruck als auch Luftfeuchtigkeit in Betracht, dass diese das Entstehen eines Geräusches aus der Bewegung des Stators des Generators beeinflusst.

Eine Windgeschwindigkeit kann sowohl die Geräuschausbreitung, als auch die Geräuschwahrnehmung beeinflussen. Insbesondere wurde erkannt, dass der Wind ein Geräusch mittragen kann und dadurch die Ausbreitung beeinflusst. Außerdem wurde erkannt, dass bei starkem Wind dieser bereits zu einem hohen Geräuschaufkommen führt und daher ein durch den Generator verursachtes Geräusch weniger wahrgenommen wird und daher lauter sein kann.

Eine Windrichtung wird ebenfalls als zu berücksichtigende Randbedingung vorgeschlagen. Die Windrichtung beeinflusst insbesondere die Ausbreitung des Geräuschs. Hier wurde besonders erkannt, dass Wind und damit die Windrichtung für die Geräuschausbreitung eine Richtwirkung entfalten kann. Schall breitet sich insbesondere in Längsrichtung der Windrichtung aus, sowohl mit dem Wind, als auch gegen den Wind, also in beide Richtungen.

Auch die Berücksichtigung einer Windscherung und/oder atmosphärischen Schichtung als Randbedingung wird zusätzlich oder alternativ vorgeschlagen. Eine Windscherung, die angibt, wie stark sich die Windgeschwindigkeit mit der Höhe verändert, kann ein Geräuschaufkommen, insbesondere ein Hintergrundgeräusch beeinflussen, aber auch eine Schallausbreitung beeinflussen. Eine atmosphärische Schichtung, die angibt, wie stark Luftschichten in vertikaler Richtung geschichtet sind, kann besonders die Schallausbreitung beeinflussen.

Bei alledem ist zu berücksichtigen, dass die Steuervorschrift verändert wird, die wiederrum eine weitere Eingangsgröße berücksichtigt, nämlich insbesondere die Drehzahl. Diese Berücksichtigung findet durch die Verwendung der Steuervorschrift in jedem Fall statt. Im Ergebnis ergibt sich daher eine Abhängigkeit der Steuerung im Teillastbereich von wenigstens drei Größen, nämlich der Eingangsgröße der Steuervorschrift, der Luft-spaltdicke - sei es direkt oder indirekt - und der wenigstens einen Randbedingung.

Hier wurde besonders erkannt, dass durch die Berücksichtigung der genannten Parameter, also der Eingangsgrößen und der wenigstens einen Randbedingung, eine Auswirkung auf eine Schallimmission gut vorhergesagt werden kann, ohne diese konkrete Schallimmission an einem relevanten Immissionspunkt notwendigerweise im laufenden Betrieb aktuell erfassen zu müssen.

Auch hierbei ist zu berücksichtigen, dass eine Steuervorschrift entsprechend ausgewählt oder eingestellt wird. Damit wird die Steuervorschrift so eingestellt oder ausgewählt, dass sie möglichst zur Einhaltung einer vorgegebenen Schallimmissionsgrenze an einen Immissionspunkt führt. Die Auswahl oder das Einstellen dieser Steuervorschrift führt dann dazu, dass dieses Ziel auch längerfristig bei schwankenden Windbedingungen erreicht werden kann, denn genau dafür ist die Steuervorschrift vorbereitet.

Gemäß einem Aspekt wird vorgeschlagen, dass zum Auswählen oder Einstellen der Steuervorschrift in Abhängigkeit von einer erfassten und/oder einer geschätzten Luft-spaltdicke und/oder in Abhängigkeit von einer Generatortemperatur und zusätzlich in Abhängigkeit von wenigstens einer Randbedingung eine Einstellvorschrift verwendet wird. Dazu wird vorgeschlagen, dass die Einstellvorschrift das Auswählen oder Einstellen der Steuervorschrift so vorgibt, dass eine Schallimmission der Windenergieanlage eine vorgegebene Schallimmissionsgrenze an einem Immissionspunkt einhält.

Ein solcher Immissionspunkt kann ein Punkt in der Nähe der Windenergieanlage sein, an dem die Schallimmissionsgrenze vorgegeben wird. Besonders kann dies ein Punkt sein, an dem die Schallimmission relevant ist. Beispielsweise kann hier ein Wohnhaus stehen.

Das Auswählen oder Einstellen der Steuervorschrift erfolgt also so, dass die vorgegebene Schallimmissionsgrenze an dem Immissionspunkt eingehalten werden kann. Dies wird durch die Einstellvorschrift erreicht.

Die Einstellvorschrift ist somit so erstellt worden, dass Zusammenhänge zwischen Luftspaltdicke und der wenigstens einen Randbedingung einerseits und der Schallimmission an dem Immissionspunkt andererseits vorhersehbar sind. Dabei wird auch jeweils das Verhalten der Windenergieanlage gemäß der einzustellenden oder auszuwählenden Steuervorschrift berücksichtigt.

Die Einstellvorschrift kann beispielsweise durch Voruntersuchungen oder Simulationen erstellt worden sein. Solche Simulationen berücksichtigen die Schallausbreitung in Abhängigkeit von den Randbedingungen. Solche Simulationen berücksichtigen ebenfalls die Steuervorschrift und sie berücksichtigen dann unterschiedliche Betriebspunkte. Besonders kommt in Betracht, dass beispielsweise für eine Wettersituation die Randbedingungen vorgegeben werden und dann ein Betriebspunkt so eingestellt wird, dass die Schallimmissionsgrenze an den Immissionspunkt grade eingehalten wird. Dann kann die Wettersituation in der Simulation variiert werden, sodass sich auch andere Schallausbreitungsbedingungen einstellen. Anhand dessen kann wieder ein zugehöriger Betriebspunkt bestimmt werden, bei dem die Schallimmissionsgrenze an den Immissionspunkt grade eingehalten wird. Auf diese Art und Weise können viele Betriebspunkte gefunden und zu einer Steuervorschrift zusammengesetzt werden.

All dies kann für eine Luftspaltdicke und/oder eine Generatortemperatur durchgeführt werden.

Der Vorgang kann dann mit unterschiedlichen Variationen wiederholt werden. Dabei können Luftspaltdicke bzw. Temperatur des Generators variiert werden und/oder die Randbedingungen, insbesondere die Wettereinstellung.

Auf diese Art und Weise können verschiedene Steuervorschriften bestimmt werden, zum Beispiel verschiedene Betriebskennlinien und eine geeignete Zuordnung in Abhängigkeit von der Luftspaltdicke und den Randbedingungen kann ebenfalls aufgenommen werden.

Eine solche Simulation kann ebenfalls die Leistungsfähigkeit der Windenergieanlage berücksichtigen, insbesondere jeweils nach einem aerodynamisch optimalen Betriebs-punkt suchen. Jeder gefundene Betriebspunkt zeichnet sich also nicht nur dadurch aus, dass er die vorgegebene Schallimmissionsgrenze einhält, sondern auch, dass er aerodynamisch optimal ist, also unter Berücksichtigung der Randbedingungen und der einzuhaltenden Schallimmissionsgrenze optimal ist, besonders dazu führt, dass die maximal mögliche Leistung erzeugt wird.

Die Einstellvorschrift kann dabei auch als mehrdimensionale Tabelle hinterlegt sein, die jeweils eine Steuervorschrift, den Randbedingungen und der Luftspaltdicke bzw. Temperatur zuordnet.

Eine Einstellvorschrift kann statt in einer Simulation aber auch nach und nach im laufenden Betrieb erstellt werden. Hierzu können anfangs im laufenden Betrieb Immissionsmessungen an dem Immissionspunkt durchgeführt werden, um eine Steuervorschrift durch Variationen zu finden, bei der die Schallimmissionsgrenze an dem Immissionspunkt eingehalten wird. Die Randbedingungen einschließlich der Luftspaltdicke bzw. Generator-temperatur können aufgenommen werden. Ihnen wird eine Steuervorschrift zugeordnet, oder die Steuervorschrift wird davon abhängig eingestellt. Dieser Zusammenhang bildet die Einstellvorschrift.

Ist die Einstellvorschrift als Tabellenwerk hinterlegt, können somit entsprechende Bereiche der Tabelle befüllt werden. Wenn die Tabelle auf diese Art und Weise nicht vollständig gefüllt werden kann, so können fehlende Bereiche durch Interpolation aufgefüllt werden und/oder ggf. gezielte Betriebspunkte angefahren werden, um dadurch einen Teil der Tabelle zu füllen bzw. die Einstellvorschrift auszubilden. Die Einstellvorschrift kann insoweit auch als Funktion oder Funktionenschar ausgebildet sein.

Das Resultat ist dann, dass zum Auswählen oder Einstellen der Steuervorschrift die Einstellvorschrift verwendet wird. Dabei fließen Luftspaltdicke bzw. Generatortemperatur und wenigstens eine Randbedingung ein, die dann über die Einstellvorschrift zu einer entsprechenden Steuervorschrift führen. Die so ausgewählte oder eingestellte Steuervor-schrift führt zu einer optimalen Steuerung der Windenergieanlage, besonders hinsichtlich Ertrag, bei Einhaltung der Schallimmissionsgrenze an dem Immissionspunkt.

Ändert sich dann beispielsweise nur die Luftspaltdicke bzw. die Generatortemperatur, kann die Steuervorschrift entsprechend angepasst werden. Auch das kann mittels der Einstellvorschrift durchgeführt werden. Damit wird erreicht, dass die Windenergieanlage dauerhaft optimal betrieben werden kann. Es wird vermieden, dass eine Steuervorschrift ausgewählt oder eingestellt wird, die in einem Moment optimal ist und eine vorgegebene Schallimmissionsgrenze an einem Immissionspunkt einhält, aber bei einer Änderung einer Luftspaltdicke bzw. Generatortemperatur nicht angepasst wird. Die Steuervorschrift kann der Luftspaltdicke ständig nachgeführt werden.

Hier wurde besonders berücksichtigt, dass ein Generator einer Windenergieanlage, insbesondere ein hier vorzugsweise verwendeter Generator einer getriebelosen Windenergieanlage eine große Masse und somit eine große thermische Kapazität besitzen kann. Verändert sich also ein Betriebspunkt beispielsweise durch eine Drehzahlerhöhung, weil die Windgeschwindigkeit steigt, erhöht sich die Generatortemperatur zunächst nicht. Sie erhöht sich nur langsam.

Hält der neu gewählte Betriebspunkt die Schallimmissionsgrenze an dem Immissionspunkt ein, könnte er in dem Moment optimal sein. Erst verändert sich die Temperatur des Generators und damit die Luftspaltdicke, was eine Veränderung des Betriebspunktes bei Einhaltung der Schallimmissionsgrenze zulassen würde. Durch die Auswahl oder das Einstellen der Steuervorschrift in Abhängigkeit von der Luftspaltdicke bzw. Generator-temperatur kann diese Veränderung des Betriebspunktes, nämlich über die Änderung der Steuervorschrift erreicht werden. Ein optimaler Betriebspunkt kann gewährleistet werden. Andernfalls könnte sich die Luftspaltdicke erhöhen, ohne dass die Steuerung angepasst würde. Die Geräuschimmission würde sich also verringern, so dass die neue Situation ausgereizt wird.

Es kann aber auch die Außentemperatur bei der Windenergieanlage die Temperatur des Generators beeinflussen. Erhöht sich also die Außentemperatur, zum Beispiel beim Übergang von Nacht zu Tag, kann sich auch die Generatortemperatur erhöhen und die Luftspaltdicke vergrößern. Somit wird vorgeschlagen, diese Veränderung zu berücksichtigen und die Steuervorschrift entsprechend anzupassen. Also auch in diesem Fall kann dann ein optimaler Betriebspunkt erreicht werden. Der bisher optimale Betriebspunkt kann also verändert werden, um dann erneut einen optimalen Betriebspunkt zu erreichen. Das geschieht über die entsprechende Auswahl oder Einstellung der Steuervorschrift. Der aktuelle Betriebspunkt wird also immer einem optimalen Betriebspunkt nachgeführt.

Erfindungsgemäß wird auch eine Windenergieanlage vorgeschlagen. Die Windenergieanlage weist einen Generator zum Erzeugen elektrischen Stroms auf, und der Generator weist einen Luftspalt mit einer variablen Luftspaltdicke auf, wobei eine Steuereinrichtung vorgesehen ist, die dazu vorbereitet ist, dass die Windenergieanlage in einem Teillastbereich mittels einer Steuervorschrift gesteuert wird, und wobei die Steuereinrichtung dazu vorbereitet ist, dass die Windenergieanlage in Abhängigkeit von der Luftspaltdicke gesteuert wird, wobei die Steuereinrichtung dazu vorbereitet ist, dass in Abhängigkeit von der Luftspaltdicke die Steuervorschrift ausgewählt oder eingestellt wird.

Insbesondere wird vorgeschlagen, dass die Windenergieanlage, insbesondere die Steuereinrichtung, dazu vorbereitet ist, ein Verfahren gemäß einer der vorstehend beschriebenen Ausführungsformen auszuführen.

Die Steuereinrichtung kann insbesondere einen Prozessrechner aufweisen, in dem das vorgeschlagene Verfahren implementiert ist. Zusätzlich können Sensoren vorgesehen sein, um die Luftspaltdicke, eine Generatortemperatur und/oder Randbedingungen zu erfassen.

Gemäß einem Aspekt wird vorgeschlagen, dass die Windenergieanlage als getriebelose Windenergieanlage ausgebildet ist, und/oder dass der Generator als permanent erregter Synchrongenerator ausgebildet ist, und/oder dass der Generator als Innenläufer ausgebildet ist. Die Vorteile dazu wurden oben bereits beschrieben.

Die Erfindung wird nun nachfolgend anhand von Ausführungsformen unter Bezugnahme auf die Figuren beispielhaft näher erläutert.
Figur 1 zeigt eine Windenergieanlage in einer perspektivischen Darstellung.
Figur 2 zeigt eine Gondel einer Windenergieanlage in einer geschnittenen und einer vereinfachten Darstellung.
Figur 3 zeigt schematisch ein Steuerschema zum Steuern einer Windenergieanlage.
Figur 4 veranschaulicht eine mögliche Steuervorschrift, die eine Drehzahlvermeidungssteuerung beinhaltet, anhand einer Kennlinie.
Figur 5 zeigt schematisch eine Anordnung aus einer Windenergieanlage und einem relevanten Immissionspunkt.
Figur 6 zeigt einen Ablaufplan zum Anlernen eines Zusammenhangs zwischen Luftspaltdicke bzw. Temperatur, Nebenbedingungen und einer zuzuordnenden Steuervorschrift.
Figur 7 zeigt einen Ablaufplan zum Auswählen einer Steuervorschrift.

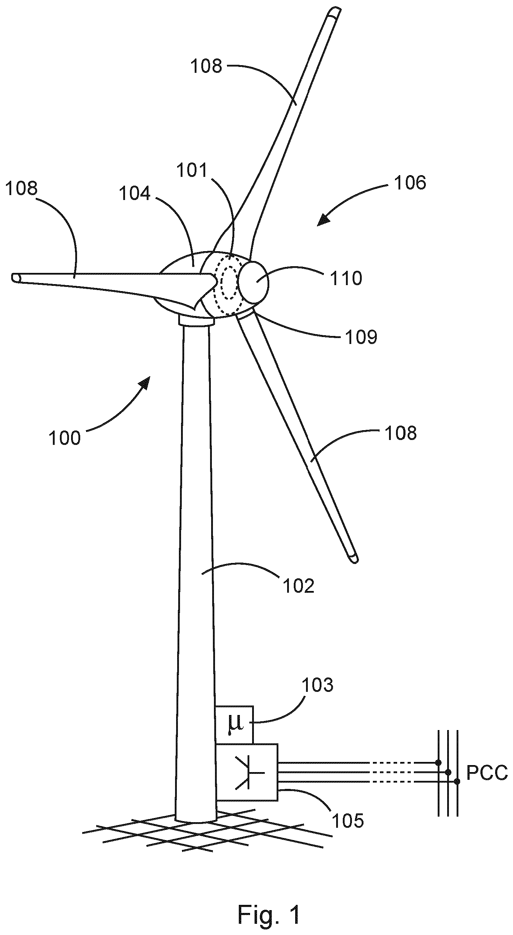

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen, die die Steuereinrichtung beinhalten oder bilden kann. Die Anlagensteuerung 103 kann auch Vorgabewerte von extern, insbesondere von einem zentralen Parkrechner erhalten.

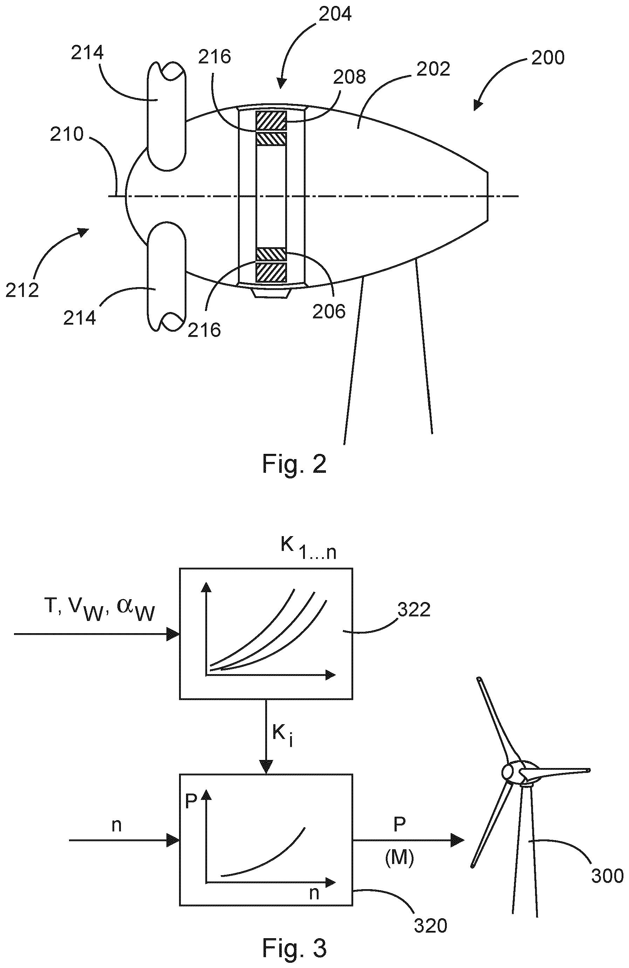

Figur 2 zeigt eine Gondel 202 einer Windenergieanlage 200, die auch der Windenergieanlage 100 der Figur 1 entsprechen kann. Die Gondel 202 zeigt einen Generator 204 und die Gondel 202 ist im Bereich des Generators 204 geschnitten dargestellt. Auch der Generator 204 ist in einer Schnittdarstellung gezeigt.

Der Generator 204 ist als Ringgenerator ausgebildet und zeigt im Wesentlichen einen Läufer 206 und einen Stator 208. Der Generator ist hier als Innenläufer ausgebildet, sodass der Läufer 206 in dem Stator 208 dreht. Eine Drehachse 210 ist ebenfalls eingezeichnet.

Die Darstellung ist sehr vereinfacht, sodass eine Verbindung zwischen dem Läufer 206 und dem Rotor 212 mit seinen angedeuteten Rotorblättern 214 nicht dargestellt ist, aber natürlich vorhanden ist.

Der Generator 204 weist zwischen dem Läufer 206 und dem Stator 208 einen Luftspalt 216 auf.

Der Generator 204 ist somit als Ringgenerator ausgebildet, weil Läufer 206, Luftspalt 216 und Stator 208 im Wesentlichen ringförmig mit großem Abstand um die Drehachse 210 ausgebildet ist. Der Generator 204 ist zudem, was der Detailzeichnung nicht zu entnehmen ist, als permanent erregter Synchrongenerator ausgebildet. Somit sind in dem Läufer 206 in Umfangsrichtung diverse Permanentmagneten angeordnet. Im Betrieb der Windenergieanlage erwärmt sich der Läufer 206 damit wenig, jedenfalls nicht durch elektrische Ströme im Läufer 206 weil solche nicht vorhanden sind.

Durch Drehung des Läufers 206 wird somit ein Statorstrom in dem Stator 208 erzeugt und der kann ausgegeben werden um dadurch die erzeugte elektrische Leistung abzugeben. Auch diese notwendige Bewicklung des Stators 208 ist in dieser veranschaulichen Darstellung nicht gezeigt, dem Fachmann grundsätzlich aber bekannt.

Im laufenden Betrieb ist somit grundsätzlich mit einer stärkeren Erwärmung des Stators 208 als des Läufers 206 zu rechnen. Erwärmt sich also der Generator 204, so betrifft dies im Wesentlichen den Stator 208, der sich dadurch ausdehnt. Als Konsequenz nimmt die Dicke des Luftspaltes 216 zu. Die Dicke des Luftspalts 216, also die Luftspaltdicke, ist somit der Abstand zwischen Läufer 206 und Stator 208 im Bereich des Luftspalts 216.

Figur 3 zeigt ein Steuerschema, dass die Steuerung der Windenergieanlage 300 veranschaulichen soll. Ein wesentlicher Teil der Steuerung der Windenergieanlage 300, die der Windenergieanlage 100 der Figur 1 bzw. 200 der Figur 2 entsprechen kann, ist eine Steuervorschrift gemäß dem Steuerblock 320. Dieser Steuerblock 320 erhält als Eingangs-signal eine Drehzahl des Rotors und damit bei einer getriebelosen Windenergieanlage auch des Läufers und bestimmt davon abhängig eine Leistung P. Die Leistung P ist diejenige Leistung, die bei der Windenergieanlage als Abgabeleistung des Generators eingestellt wird. Es kann hierbei die unmittelbare Abgabeleistung des Generators oder die Abgabeleistung der Windenergieanlage eingestellt werden. Diese Leistungen unterscheiden sich im Wesentlichen durch Verlustleistung, die hier zur Erläuterung der Erfindung vernachlässigbar sind.

Um die Leistung P in Abhängigkeit von der Drehzahl n auszuwählen, wird eine Drehzahlleistungskennlinie verwendet, die symbolisch in dem Steuerblock 320 eingezeichnet ist. Am Ausgang des Steuerblocks 320 ist in Klammern angedeutet, dass statt einer Drehzahlleistungskennlinie auch eine Drehzahldrehmomentkennlinie in Betracht kommt, somit als eine Alternative angedeutet ist. Es kommen aber auch weitere Einstellgrößen wie insbesondere die Zwischenkreisspannung in Betracht.

Es wird nun vorgeschlagen, dass eine in dem Steuerblock 320 implementierte Steuervorschrift, hier nämlich implementiert durch die Drehzahlleistungskennlinie, veränderbar ist. Die Veränderung kann dadurch durchgeführt werden, dass die Drehzahlleistungskennlinie, oder andere Steuervorschriften, verstellt oder ausgetauscht wird bzw. eingestellt oder ausgewählt wird. Zum Einstellen können beispielsweise Parameter verändert bzw. eingestellt werden.

Die Figur 3 veranschaulicht die Variante, dass zwischen diversen möglichen Steuervorschriften, hier nämlich Drehzahlleistungskennlinien, ausgewählt wird. Das ist in dem Vorgabeblock 322 veranschaulicht. In dem Vorgabeblock 322 sind somit mehrere Drehzahlleistungskennlinien hinterlegt, von denen jede für sich, je nach Situation, eine optimierte Drehzahlleistungskennlinie bilden kann. Besonders sind sie aerodynamisch optimiert, dabei unter Einhaltung wenigstens einer Geräuschvorgabe.

Besonders zum Einhalten einer Geräuschvorgabe, insbesondere der Vorgabe eines maximalen Schalldruckpegels an einem Immissionspunkt, kann eine der hinterlegten Drehzahlleistungskennlinien ausgewählt werden. Wie gesagt stehen diese repräsentativ für auch andere mögliche Steuervorschriften, die hier hinterlegt sein können, zum Beispiel funktional vorgegebene Zusammenhänge zwischen Drehzahl und Leistung oder Drehzahl und Drehmoment oder Drehzahl und Zwischenkreisspannung.

Die Auswahl der Drehzahlleistungskennlinie erfolgt wenigstens in Abhängigkeit der Temperatur T, Der Windgeschwindigkeit V_{w} und der Windrichtung a_{w}. Hier wurde besonders erkannt, dass die Temperatur T Einfluss auf die Luftspaltdicke hat und in Abhängigkeit von der Luftspaltdicke sinnvollerweise unterschiedliche Drehzahlleistungskennlinien vorgegeben werden. Solche sind hier in dem symbolischen Vorgabeblock 322 hinterlegt.

Es wird somit nun vorgeschlagen, eine der Drehzahlleistungskennlinien in Abhängigkeit von der Temperatur T, der Windgeschwindigkeit V_{w} und der Windrichtung α_{w} auszuwählen. Es können aber auch weitere Randbedingungen berücksichtigt werden, wie beispielsweise eine Luftdichte oder Luftfeuchtigkeit. Das ist in Figur 3 der Einfachheit halber nicht veranschaulicht. Auch in folgenden Figuren sind solche Randbedingungen nicht gezeigt um die Figuren nicht zu überladen.

Die in dem Vorgabeblock 322 hinterlegten Drehzahlleistungskennlinien sind als K₁ bis Kₙ hinterlegt. In Abhängigkeit von den Eingangsgrößen wird eine dieser Drehzahlkennlinien ausgewählt und an den Steuerblock 320 übergeben. Entsprechend wird die Kennlinie Kᵢ übergeben.

Es kommt aber auch in Betracht, dass die Windgeschwindigkeit und/oder die Windrichtung nicht berücksichtigt werden. Die Windgeschwindigkeit V_{w} kann grundsätzlich durch die ausgewählte Kennlinie berücksichtigt werden. Die Berücksichtigung der Windrichtung αW ist besonders dann von Bedeutung, wenn nur ein Immissionspunkt zu berücksichtigen ist, der in einer bekannten Richtung zur Windenergieanlage steht. Ist aber der Schalldruckpegel in gleicher Entfernung rundherum um die Windenergieanlage mit gleichen Werten zu berücksichtigen, kann die Berücksichtigung der Windrichtung entbehrlich sein.

Eine als Randbedingung sinnvoll zu berücksichtigende Größe ist die Luftfeuchtigkeit, die hier auch repräsentativ für andere Randbedingungen wie den Luftdruck und die Lufttemperatur genannt wird. Bei der Luftfeuchtigkeit und den anderen beiden genannten Randbedingungen ist besonders zu berücksichtigen, dass sie sich nicht so schnell ändern. Entsprechend kann eine Steuervorschrift, also insbesondere eine Drehzahlleistungskennlinie oder eine andere Kennlinie in Abhängigkeit von einer solchen Randbedingung ausgewählt werden, ohne dass sie in Kürze wieder verändert werden muss.

Jedenfalls veranschaulicht Figur 3 somit dieses Steuerschema und im Idealfall wird eine Drehzahlleistungskennlinie Kᵢ, oder andere Steuervorschrift gefunden und an den Steuerblock 320 übergeben, die die Windenergieanlage optimal steuert, während noch gerade ein vorgeschriebener Schaltdruckpegel eingehalten wird.

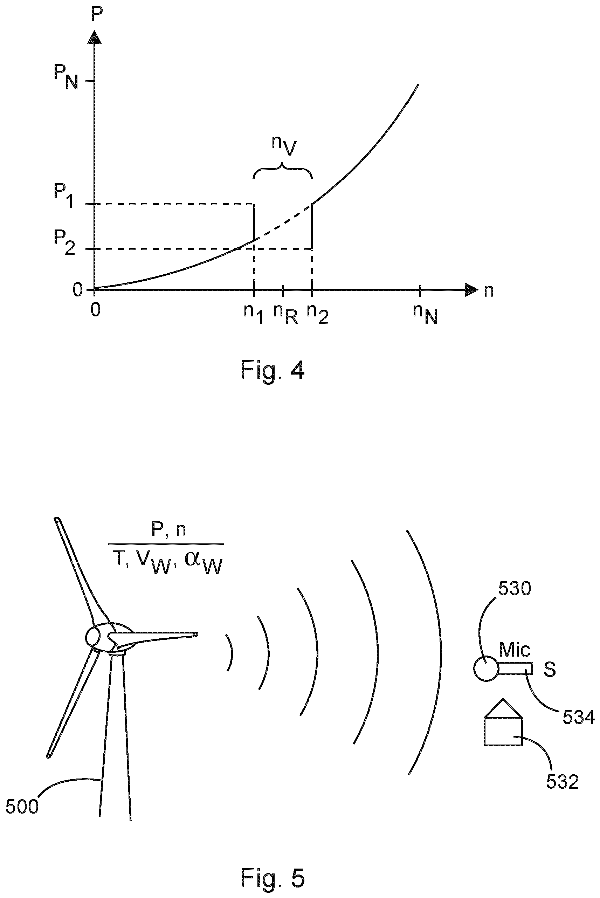

Figur 4 zeigt ein Diagramm einer Steuervorschrift, die eine Drehzahlvermeidungssteuerung beinhaltet. Auch in Figur 4 wurde wieder exemplarisch eine Drehzahlleistungskennlinie verwendet. Diese gibt somit einen Zusammenhang zwischen einer erfassten Drehzahl n und einer davon abhängig einzustellenden Leistung P an.

Zusätzlich liegt hier aber eine Resonanzdrehzahl n_{R} vor, bei der eine Schwingung der Windenergieanlage möglicherweise angeregt werden kann. Dabei ist zu beachten, dass eine Resonanzdrehzahl, die eine Schwingung anregt, nicht unbedingt bedeuten muss, dass dadurch auch eine sogenannte Resonanzkatastrophe zu erwarten ist. Es kommt auch in Betracht, dass es bei oder in der Nähe der Resonanzdrehzahl lediglich zu einer sehr hohen Geräuschentwicklung kommt.

Jedenfalls kommt in Betracht, dass zumindest eine Drehzahlleistungskennlinie, die nämlich in dem Vorgabeblock 322 der Figur 3 hinterlegt sein könnte, eine Drehzahlvermeidungssteuerung beinhaltet. Möglicherweise kommt dabei in Betracht, dass bei besonders großen Luftspaltdicken selbst bei der Resonanzdrehzahl die Geräuschentwicklung noch akzeptabel ist. Das würde bedeuten, dass in dem Vorgabeblock 322, um auf diesen veranschaulichend wieder zurückzugreifen, sowohl Drehzahlleistungskennlinie sowohl mit, als auch ohne Drehzahlvermeidungssteuerung hinterlegt sein können. Mit Auswahl der geeigneten Drehzahlleistungskennlinie würde dann auch ausgewählt werden, ob eine Drehzahlvermeidungssteuerung implementiert wird oder nicht.

Jedenfalls kann eine Drehzahlleistungssteuerung so realisiert sein, dass in der Drehzahlleistungskennlinie, oder anderen Steuervorschriften, um die Resonanzdrehzahl n_{R} ein Drehzahlvermeidungsbereich n_{V} vorgesehen ist. Dieser kann durch eine untere Grenzdrehzahl n₁ und eine obere Grenzdrehzahl n₂ gekennzeichnet sein. Erreicht der Arbeitspunkt auf der Drehzahlleistungskennlinie bei steigender Drehzahl die untere Grenzdrehzahl n1, so wird die Leistung stärker, nämlich im Idealfall senkrecht erhöht, sodass sich die Drehzahl nicht weiter erhöht. Die Leistung kann sich dabei bis zu einem oberen Leistungsgrenzwert P₁ erhöhen. Steigt die Windgeschwindigkeit dann noch weiter an und würde zu einer noch höheren Leistung führen, kann der Wert der Leistung dann von dem oberen Leistungsgrenzwert P₁ auf den unteren Leistungsgrenzwert P₂ verringert werden. Damit würde sich die Drehzahl sehr schnell erhöhen und den gestrichelt dargestellten Bereich der Drehzahlleistungskennlinie schnell durchfahren und dann oberhalb der oberen Grenzdrehzahl n₂ jeweils weiter fortsetzen.

Umgekehrt würde bei sinkender Drehzahl die obere grenzdrehzahl n₂ erreicht werden und dann die Leistung stark abgesenkt werden, um ein weiteres Abfallen der Drehzahl zu verhindern. Wird eine vorbestimmte untere Leistungsgrenze P₂ erreicht, kann dann die Leistung schnell auf den Wert der oberen Leistungsgrenze P₁ verändert werden. Das bremst die Windenergieanlage ab, sodass die Drehzahl schnell zur unteren Grenzdrehzahl n₁ abfällt. Auch hierdurch wird somit der Drehzahlvermeidungsbereich schnell durchfahren.

Hier wird besonders vorgeschlagen, dass eben eine solche Kennlinie, wie sie in Figur 4 dargestellt ist, in Abhängigkeit von der Luftspaltdicke bzw. alternativ in Abhängigkeit von der Temperatur T ausgewählt werden kann. Bei der Auswahl kann in Betracht kommen, dass auch Kennlinien ohne Drehzahlvermeidungssteuerung verwendet werden, es können aber auch in Betracht kommen, dass die Drehzahlvermeidungssteuerung je nach Kennlinie unterschiedlich ausgebildet ist. Insbesondere die untere und obere Grenzdrehzahl n1 und n₂ können unterschiedlich eingestellt werden bzw. vorgegeben werden und ebenso die obere und untere Leistungsgrenze P₁ bzw. P₂.

Figur 5 veranschaulicht eine Anordnung einer Windenergieanlage 500 zu einem Schallimmissionspunkt 530, an dem beispielsweise ein Wohnhaus 532 stehen kann.

In der Figur 5 sind Schalldruckwellen angedeutet, die sich von der Windenergieanlage 500 zum Schallimmissionspunkt 530 bzw. dem Wohnhaus 532 ausbreiten. Im Übrigen kann auch hier die Windenergieanlage 500 einer der vorherigen Windenergieanlagen 100, 200 oder 300 entsprechen.

Der Schalldruckpegel an dem Schallimmissionspunkt 530 hängt von vielen Parametern ab. Dazu sind in der Figur 5 oberhalb der Windenergieanlage 500 einige exemplarisch genannt. Durch einen waagerechten Strich getrennt stehen über diesem die Parameter der Leistung P und der Drehzahl n. Das sind an der Windenergieanlage eingestellte Werte. Außerdem können eine Generatortemperatur T, eine Windgeschwindigkeit V_{w} und eine Windrichtung α_{w} einen Einfluss haben. Diese sind nicht einstellbar und stehen daher unter dem waagerechten Strich. Es kommen aber auch weitere oder andere Randbedingungen in Betracht wie Luftfeuchtigkeit, Luftdruck oder Lufttemperatur. Die Lufttemperatur ist von der in Figur 5 dargestellten Generatortemperatur T zu unterscheiden. Die Lufttemperatur kann besonders Einfluss auf die Ausbreitung des Schalls haben.

Basierend auf diesen dargestellten Werten und der Messung des Schalldruckpegels S an den Schallimmissionspunkt 530, was dort ebenfalls durch den Buchstaben S und dem symbolisierten Mikrofon 534 angedeutet ist, können Zusammenhänge aufgestellt werden.

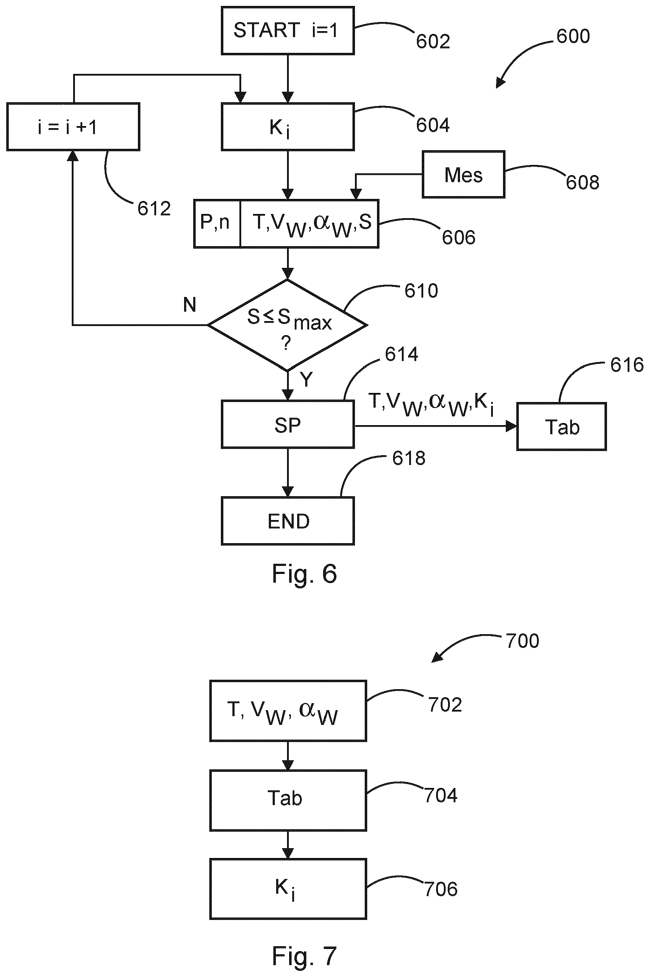

Der Ablaufplan der Figur 6 veranschaulicht eine mögliche Auswertung der Zusammenhänge, die gemäß der Anordnung bzw. dem Aufbau der Figur 5 aufgenommen werden.

Als Ausgangspunkt kann angesehen werden, dass beispielsweise in Simulationen mehrere Kennlinien oder andere Steuervorschriften für optimale Betriebe der Windenergieanlage vorbestimmt wurden. Der besseren Veranschaulichung halber wird hier wieder auf eine Drehzahlleistungskennlinie Bezug genommen. Die nachfolgenden Erläuterungen, zum Auswählen der Drehzahlleistungskennlinien, können aber sinngemäß auch verwendet werden, um stattdessen einzelne Betriebspunkte zu bestimmen und diese dann zu Drehzahlleistungskennlinien zusammenzusetzen. Das würde entsprechend einen häufigeren Durchlauf des nachfolgend geschilderten Ablaufs erforderlich machen.

Das Ablaufschema 600 der Figur 6 beginnt mit einem Startblock 602. In dem Startblock 602 können Anfangswerte gesetzt werden. Hier wird das besonders anhand einer Nummerierung möglicher Drehzahlleistungskennlinien veranschaulicht. Es wird also mit der ersten begonnen, sodass die Variable i den Wert 1 annimmt. Mit diesem Startwert wird dann die Windenergieanlage mit einer entsprechenden Betriebskennlinie k₁ im Betriebsblock 604 betrieben. In dem Betriebsblock 604 liegt also ein Betreib der Windenergieanlage mit der Kennlinie Kᵢ zugrunde.

Der Ablauf geht dann weiter zum Aufnahmeblock 606, in dem Werte aufgenommen werden. Zu den Werten gehören einerseits Betriebswerte der Windenergieanlage wie die Leistung P und die Drehzahl n, andererseits Messwerte oder messbare Werte, die nicht eingestellt werden, sich allenfalls indirekt durch den Betrieb der Windenergieanlage ergeben. Dazu gehört die Generatortemperatur T, die Windgeschwindigkeit V_{w}, die Windrichtung α_{w} und der Schalldruckpegel S. Diese unterschiedlichen beiden Kategorien sind in dem Aufnahmeblock 606 durch einen senkrechten Strich symbolisch voneinander getrennt.

Für die Messwerte oder messbaren Werte ist der Messblock 608 vorgesehen, der diese Werte erfassen kann. Insbesondere kann er das Mikrofon 534 gemäß Figur 5 beinhalten bzw. von einem solchen Mikrofon Werte beziehen und somit den Schalldruckpegel S erfassen.

Auch die anderen genannten Größen, insbesondere die Generatortemperatur T können gemessen werden. Es kommen aber auch indirekte Messungen in Betracht. So kann die Windgeschwindigkeit V_{w} aus der verwendeten Betriebskennlinie und der resultierenden Drehzahl abgeleitet werden. Die Windrichtung kann aus einer Ausrichtung der Windenergieanlage, also eine Azimutposition, abgeleitet werden oder diese Azimutposition kann sogar dieser Windrichtung entsprechen.

Jedenfalls setzt sich das Ablaufschema im Abfrageblock 610 fort. Dort wird der erfasste Schalldruckpegel S mit einem maximal zulässigen Schalldruckpegel Sₘₐₓ verglichen. Ist dieser Schalldruckpegel S größer als der maximal zulässige Schalldruckpegel Sₘₐₓ, so muss eine andere Betriebskennlinie verwendet werden. Alternativ oder ergänzend könnte hier also neben oder statt einem absoluten Maximalwert auch die Differenz zum Pegel des umgebenen Frequenzbereiches als Maximalwert verwendet werden. Vorzugsweise können dafür auch das Geräusch der Rotorblätter und/oder anderer relevanter Lärmquellen der Anlage, bzw. das Grundgeräusch am Immissionspunkt geschätzt oder gemessen werden.

Je nach Ergebnis des Vergleichs, unabhängig davon, wie der Maximalwert definiert ist, verzweigt der Abfrageblock 610 zum Erhöhungsblock 612. Dort wird beispielsweise ein Zähler um einen Wert erhöht und dieser erhöhte Zähler wird dem Betriebsblock 604 übergeben, der daraufhin eine entsprechend andere Betriebskennlinie verwendet. Auch das ist besonders symbolisch zu verstehen und es kommen natürlich auch andere Möglichkeiten in Betracht, als hochzuzählen.

Es kann z.B. auch eine genauere Auswertung des Schalldruckpegels S erfolgen, also wie stark er den maximal zulässigen Wert überschreitet. Umgekehrt kommt natürlich auch in Betracht, dass der maximal zulässige Schalldruckpegel Sₘₐₓ stark unterschritten wird, was ebenfalls zu einem Wechsel der Betriebskennlinie oder anderweitige Änderung der Steuervorschrift führen sollte.

Jedenfalls sieht das Schema hier vor, dass der Betrieb der Windenergieanlage, der durch den Betriebsblock 604 symbolisiert wird, mit einer geänderten Steuervorschrift bzw. Betriebskennlinie fortgesetzt wird. Dann werden ebenfalls die Parameter in dem Aufnahmeblock wieder erfasst, auch unter Zuhilfenahme des Messblocks 608 und die Abfrage gemäß Abfrageblock 610 wird wiederholt.

Dies wird solange wiederholt, bis bei dem Abfrageblock 610 herauskommt, dass der erfasste Schalldruckpegel S nicht mehr über dem Grenzwert liegt. Dann setzt sich der Ablauf zum Speicherblock 614 fort. Dieser steht dafür, dass die zuletzt verwendete Betriebskennlinie als optimal angesehen wird, denn sie ist die erste, bei der der Schalldruckpegel S eingehalten wurde. Dazu können dann die zugehörigen Werte abgespeichert werden.

Dazu wird zur Generatortemperatur T und insbesondere weiteren Randbedingungen die als optimal gefundene Betriebskennlinie Kᵢ in einer Tabelle in dem Tabellenblock 626 abgespeichert. Die weiteren Randbedingungen können die Windgeschwindigkeit V_{w} und die Windrichtung α_{w} sein, aber auch zusätzlich oder alternativ Lufttemperatur, Luftfeuchte und Luftdruck. Nur exemplarisch zeigt die Figur 6 die Windgeschwindigkeit V_{w} und die Windrichtung α_{w} repräsentativ für weitere oder andere Randbedingungen.

In Abhängigkeit von der Generatortemperatur T und ggf. den weiteren Randbedingungen kann somit umgekehrt die optimale Betriebskennlinie Kᵢ aus der Tabelle ausgelesen werden. Wird diese dann für den Betrieb der Windenergieanlage verwendet, führt das dazu, dass der Schalldruckpegel eingehalten wird.

Ist dieser Speichervorgang abgeschlossen, ist ein weiterer Wert der Steuervorschrift erstellt worden und in der Tabelle abgespeichert worden. Dieser Ablauf ist dann beendet, sodass er dann zum Ende zum Block 618 führt. Ändern sich nun Bedingungen, insbesondere Randbedingungen, kann der Ablauf gemäß Figur 6 aber von vorne beginnen, um einen weiteren Wert für die Tabelle zu ermitteln.

Figur 6 zeigt somit ein Schema, mit dem Steuervorschriften ermittelt werden können. Dieses Schema kann im laufenden Betrieb der Anlage angewendet werden, idealerweise ist dieser Vorgang zum Erstellen diverser Steuervorschriften aber irgendwann abgeschlossen. Besonders dann, wenn die Tabelle vollständig ist. Es kann aber auch vorgesehen sein, dass dieser Ablauf gelegentlich wiederholt wird, auch wenn die Tabelle gefüllt ist, um etwaige Anpassungen vornehmen zu können. Es kommt auch in Betracht, dass zu Randbedingungen geprüft wird, ob es zu diesen geeignete Werte in der Tabelle gibt. Dabei kann es ausreichen, dass einige Werte jeweils in der Nähe vorhanden sind, sodass der aktuelle Betriebspunkt interpoliert werden kann.

Besonders kommt auch in Betracht, dass das Mikrofon, das symbolisch in Figur 5 und dem Bezugszeichen 534 gezeigt ist, nicht dauerhaft installiert ist, sondern nur solange die Windenergieanlage vermessen wird, also solange bis die Tabelle gemäß dem Tabellenblock 616 im Wesentlichen gefüllt ist.

Ein Betrieb der Windenergieanlage erfolgt dann im Idealfall wie in Figur 7 veranschaulicht. Der Ablaufplan 700 der Figur 7 beginnt mit dem Randbedingungsblock 702. Dort können besonders die Luftspaltdicke bzw. die Generatortemperatur T sowie weitere Randbedingungen aufgenommen werden. Auch hier sind zur Konsistenz der vorigen Figuren als Randbedingungen die Windgeschwindigkeit V_{w} und die Windrichtung α_{w} eingezeichnet. Es kommt aber auch in Betracht, dass zusätzliche oder andere Randbedingungen verwendet werden, wie die bereits genannten Randbedingungen Luftdruck, Luftfeuchte und Lufttemperatur. Im Übrigen ist für dieses und alle vorstehenden Beispiele auch die Luftdichte eine mögliche Randbedingung.

Mit diesen Werten Luftspaltdicke oder Generatortemperatur und optional wenigstens einer weiteren Randbedingung wird dann eine Steuervorschrift gemäß dem Tabellenblock 704 aus der zugrundeliegenden Tabelle abgerufen. Die Tabelle, die mit dem Ablaufplan der Figur 6 gefüllt wurde, wird nun also verwendet.

Aus der Tabelle gemäß Tabellenblock 704 ergibt sich dann mit den Eingangsdaten eine Steuervorschrift, die auch hier durch die Kennlinie Kₑ repräsentiert wird. Entsprechend kann die Windenergieanlage mit dieser Kennlinie, insbesondere Drehzahlleistungskennlinie, in dem Betriebsblock 706 betrieben werden. Das Ergebnis sollte dann sein, dass die Windenergieanlage optimal betrieben wird, bei Einhaltung des Schalldruckpegels Sₘₐₓ beispielsweise an dem Immissionspunkt 530 der Figur 5.

Es wurde besonders, und nicht auf die vorstehenden Ausführungsformen beschränkt, Folgendes erkannt und folgende Lösungen vorgeschlagen.

Durch längere Betriebszeiten kommt es zur Erwärmung des Generators der Windenergieanlage. Diese Erwärmung führt zur Ausdehnung der Struktur und damit zu einer Veränderung des Luftspalts zwischen Stator und Rotor, nämlich dem Rotor des Generators, der zur besseren Abgrenzung gegen einen aerodynamischen Rotor 106 auch als Läufer 206 bezeichnet wird. Beobachtet wurde eine deutliche Ausdehnung des Luftspaltes, die zu einer Senkung der Beschleunigungen an zumindest mehreren Messpositionen führte. Diese Beschleunigung bezeichnet besonders Beschleunigungen von Abschnitten des Generators in radialer Richtung, besonders im Sinne einer mechanischen Schwingung. Im Umkehrschluss wurde erkannt, dass der "kalte" Zustand somit als ungünstig anzusehen ist und er bietet eine höhere Wahrscheinlichkeit, durch Abstrahlung von Tönen zu einer Tonhaltigkeit zu führen.

Die Idee ist nun, den Betrieb im kalten Zustand bzw. bei kleinem Luftspalt, möglicherweise ist dieser auch bei sehr gleichmäßig erwärmtem Generator gegeben, anders zu gestalten als generell. Dazu kommen folgende Möglichkeiten in Betracht:
Ein Absenken der Leistung bei gegebener Drehzahl wird vorgeschlagen, um die anregenden Kräfte zu vermindern. Drehzahlexklusionsgebiete, also Drehzahlvermeidungsbereiche, können vorgesehen sein. Hier wird ein Überspringen eines kritischen Drehzahlbereiches vorgesehen. Es kann eine Anpassung einer U_{Soll}-Kennlinie vorgesehen sein, die eine Abhängigkeit einer einzustellenden Zwischenkreisspannung und der Drehzahl angibt.

Besonders wurde erkannt, dass eine Lösung oder Verbesserung durch variables und/oder problemgetriebenes Optimieren des Betriebes erreicht werden kann.

Dadurch ist ein Optimieren der jährlichen Energieproduktion (AEP Ausbeute) erzielbar. Eine Tonhaltigkeitsabsenkung in kritischen Betriebszuständen kann erreicht werden. Dazu ist besonders eine nur temporäre Anpassung von Betrieben, also Betriebspunkten im Hinblick auf Schall sinnvoll, statt eine dauerhafte Reduzierung des Betriebspunktes vorzusehen, veränderte Schallsituationen erneut zu berücksichtigen.

Dadurch können Varianten verbessert werden, bei denen werden Betriebe dauerhaft in kritischen Bereichen angepasst werden, wenn tonale Auffälligkeiten vorliegen. Das könnte zu einer Verringerung der jährlichen Energieproduktion (einem AEP Verlust) führen, da Anpassungen des Betriebspunktes häufig mit Wirkungsgradverlusten behaftet sind.

Es wird besonders eine temporäre Anpassung von Betrieben vorgeschlagen, um die tonale Anregung des Generators nur in kritischen Zuständen zu verringern. Als Indikator hierfür ist der Luftspalt, bzw. die Luftspaltdicke und eine Temperatur oder Temperaturverteilung im Generator erkannt worden.

Besonders vorteilhaft ist es, die im Generator verbauten Temperatursensoren oder eine installierte Luftspaltmessung zu nutzen, um den Generatorzustand einzuschätzen. Je nach Erwärmungs-/ Luftspaltzustand kann dann der aktuelle Betrieb angepasst werden, um die Tonhaltigkeitsneigung zu senken.

Vorteilhaft ist, dass eine Anpassung nur zeitweise notwendig ist, was zu einer Steigerung der jährlichen Energieproduktion führt (AEP Steigerung).

## Patentansprüche

1. Verfahren zum Steuern einer Windenergieanlage (200),
- die Windenergieanlage (200) weist einen Generator (204) zum Erzeugen elektrischen Stroms auf, und
- der Generator (204) weist einen Luftspalt (216) mit einer variablen Luftspaltdicke auf, wobei
- die Windenergieanlage (200) in einem Teillastbereich mittels einer Steuervorschrift gesteuert wird, **dadurch gekennzeichnet, dass**
- die Windenergieanlage (200) in Abhängigkeit von der Luftspaltdicke gesteuert wird, und
- in Abhängigkeit von der Luftspaltdicke die Steuervorschrift (Kᵢ) ausgewählt oder eingestellt wird, **dadurch gekennzeichnet, dass**
- die Steuervorschrift (Kᵢ) eine Betriebskennliniensteuerung umfasst, bei der eine einzustellende Generatorzustandsgröße mittels einer Betriebskennlinie (Kᵢ) eingestellt wird, wobei
- die Betriebskennlinie (Kᵢ) einen Zusammenhang zwischen einer erfassten Drehzahl (n) und der einzustellenden Generatorzustandsgröße (P) vorgibt, und
- zum Auswählen oder Einstellen der Steuervorschrift eine Betriebskennlinie (Kᵢ) ausgewählt oder verändert wird.

2. Verfahren nach Anspruch 1, **dadurch gekennzeichnet, dass**
zum Steuern der Windenergieanlage (200) in Abhängigkeit von der Luftspaltdicke, insbesondere zum Auswählen oder Einstellen der Steuervorschrift (Kᵢ) in Abhängigkeit von der Luftspaltdicke,
- die Luftspaltdicke mittels Sensoren erfasst wird, und/oder
- die Luftspaltdicke aus wenigstens einer erfassten Temperatur oder Temperaturverteilung geschätzt wird, und/oder
- die Luftspaltdicke aus wenigstens einem radialen Beschleunigungswert geschätzt wird, und/oder
- die Luftspaltdicke indirekt über die Luftspaltdicke beeinflussender Parameter berücksichtigt wird.

3. Verfahren nach einem der vorstehenden Ansprüche, **dadurch gekennzeichnet, dass**
- eine bzw. die einzustellende Generatorzustandsgröße eine Abgabeleistung (P), ein Generatormoment oder eine Zwischenkreisspannung eines den Generator ansteuernden Wechselrichters umfasst oder ist, und insbesondere
- mittels einer bzw. der Betriebskennlinie in Abhängigkeit von einer bzw. der erfassten Drehzahl (n) eingestellt wird.

4. Verfahren nach einem der vorstehenden Ansprüche, **dadurch gekennzeichnet, dass**
- die Windenergieanlage (200) als getriebelose Windenergieanlage ausgebildet ist und/oder
- der Generator (204) als permanenterregter Synchrongenerator ausgebildet ist und/oder
- der Generator (204) als Innenläufer ausgebildet ist.

5. Verfahren nach einem der vorstehenden Ansprüche, **dadurch gekennzeichnet, dass**
- die Steuervorschrift eine Drehzahlvermeidungssteuerung beinhaltet, um die Windenergieanlage (200) so zusteuern, dass ein Betrieb der Windenergieanlage in einem Drehzahlvermeidungsbereich (nᵥ) vermieden wird, wobei
- der Drehzahlvermeidungsbereich (nᵥ) einen Drehzahlbereich definiert, in dem das Betreiben der Windenergieanlage vermieden werden soll, und
- die Drehzahlvermeidungssteuerung in Abhängigkeit von der Luftspaltdicke ausgewählt oder eingestellt wird, und/oder
- die Steuervorschrift so ausgewählt oder eingestellt wird, dass die Drehzahlvermeidungssteuerung in Abhängigkeit von der Luftspaltdicke ausgewählt oder eingestellt wird.

6. Verfahren nach Anspruch 5, **dadurch gekennzeichnet, dass** die Drehzahlvermeidungssteuerung die Windenergieanlage (200) so steuert, dass der Drehzahlvermeidungsbereich (nᵥ) bei abfallendem oder ansteigendem Wind durchfahren wird, um einen Betriebspunkt mit einer Drehzahl unterhalb bzw. oberhalb des Drehzahlvermeidungsbereichs einzustellen.

7. Verfahren nach einem der vorstehenden Ansprüche, **dadurch gekennzeichnet, dass**
- die Steuervorschrift mit abnehmender Luftspaltdicke so neu gewählt oder eingestellt wird, dass
- eine bzw. die Abgabeleistung verringert wird,
- ein bzw. das Generatormoment verringert wird,
und/oder
- eine bzw. die Gleichspannungszwischenkreisspannung erhöht wird, und/oder dass
- mit abnehmender Luftspaltdicke
- eine bzw. die Drehzahlvermeidungssteuerung aktiviert wird oder so eingestellt wird, dass ein Betrieb der Windenergieanlage in einem Drehzahlvermeidungsbereich vermieden wird, und/oder
- die Drehzahlvermeidungssteuerung so eingestellt wird, dass sich der Drehzahlvermeidungsbereich vergrößert, und/oder in Richtung zu einer höheren oder niedrigeren Drehzahl verschiebt.

8. Verfahren nach einem der vorstehenden Ansprüche, **dadurch gekennzeichnet, dass**
- die Steuervorschrift in Abhängigkeit von einer erfassten und/oder geschätzten Luftspaltdicke und/oder in Abhängigkeit einer Generatortemperatur ausgewählt o-der eingestellt wird, und
- zusätzlich in Abhängigkeit von wenigstens einer Randbedingung ausgewählt oder eingestellt wird aus der Liste aufweisend
- eine Luftdichte,
- einen Luftdruck,
- eine Luftfeuchtigkeit,
- eine Windgeschwindigkeit,
- eine Windrichtung,
- eine Windscherung und/oder
- eine atmosphärische Schichtung.

9. Verfahren nach einem der vorstehenden Ansprüche, **dadurch gekennzeichnet, dass**
- zum Auswählen oder Einstellen der Steuervorschrift
- in Abhängigkeit von einer erfassten und/oder geschätzten Luftspaltdicke und/oder
- in Abhängigkeit von einer Generatortemperatur und
- zusätzlich in Abhängigkeit von wenigstens einer Randbedingung
eine Einstellvorschrift verwendet wird, wobei
- die Einstellvorschrift das Auswählen oder Einstellen der Steuervorschrift so vorgibt, dass eine Schallimmission der Windenergieanlage eine vorgegebene Schallimmissionsgrenze an einem Immissionspunkt (530) einhält.

10. Windenergieanlage (200) und
- die Windenergieanlage (200) weist einen Generator (204) zum Erzeugen elektrischen Stroms auf, und
- der Generator (204) weist einen Luftspalt (216) mit einer variablen Luftspaltdicke auf, wobei
- eine Steuereinrichtung (103) vorgesehen ist, die dazu vorbereitet ist, dass die Windenergieanlage (200) in einem Teilastbereich mittels einer Steuervorschrift gesteuert wird, und **dadurch gekennzeichnet, dass**
- die Steuereinrichtung (103) dazu vorbereitet ist, dass die Windenergieanlage in Abhängigkeit von der Luftspaltdicke gesteuert wird, und
- die Steuereinrichtung (103) dazu vorbereitet ist, dass in Abhängigkeit von der Luftspaltdicke die Steuervorschrift ausgewählt oder eingestellt wird, **dadurch gekennzeichnet, dass**
- die Steuervorschrift (Kᵢ) eine Betriebskennliniensteuerung umfasst, bei der eine einzustellende Generatorzustandsgröße mittels einer Betriebskennlinie (Kᵢ) eingestellt wird, wobei
- die Betriebskennlinie (Kᵢ) einen Zusammenhang zwischen einer erfassten Drehzahl (n) und der einzustellenden Generatorzustandsgröße (P) vorgibt, und
- zum Auswählen oder Einstellen der Steuervorschrift eine Betriebskennlinie (Kᵢ) ausgewählt oder verändert wird.

11. Windenergieanlage (200) nach Anspruch 10, **dadurch gekennzeichnet, dass** die Windenergieanlage, insbesondere die Steuereinrichtung (103), dazu vorbereitet ist, ein Verfahren gemäß einem der Ansprüche 1 bis 9 auszuführen.

12. Windenergieanlage (200) nach Anspruch 10 oder 11, **dadurch gekennzeichnet, dass**
- die Windenergieanlage (200) als getriebelose Windenergieanlage ausgebildet ist und/oder
- der Generator (204) als permanenterregter Synchrongenerator ausgebildet ist und/oder
- der Generator (204) als Innenläufer ausgebildet ist.

## Claims

1. Method for controlling a wind power installation (200),
- the wind power installation (200) having a generator (204) for the generation of electric current, and
- the generator (204) having an air gap (216) with a variable air gap thickness, wherein
- the wind power installation (200) being controlled in a part load range by means of a control regulation, **characterized in that**
- the wind power installation (200) being controlled in a manner which is dependent on the air gap thickness, and
- the control regulation (Kᵢ) being selected or set in a manner which is dependent on the air gap thickness, **characterized in that**
- the control regulation (Kᵢ) comprises an operating characteristic curve control operation, in the case of which a generator state variable which is to be set is set by means of an operating characteristic curve (Kᵢ), wherein
- the operating characteristic curve (Kᵢ) specifies a relationship between a detected rotational speed (n) and the generator state variable (P) which is to be set, and
- an operating characteristic curve (Kᵢ) is selected or modified in order to select or set the control regulation.

2. Method according to Claim 1, **characterized in that**,
in order to control the wind power installation (200) in a manner which is dependent on the air gap thickness, in particular in order to select or set the control regulation (Kᵢ) in a manner which is dependent on the air gap thickness,
- the air gap thickness is detected by means of sensors, and/or
- the air gap thickness is estimated from at least one detected temperature or temperature distribution, and/or
- the air gap thickness is estimated from at least one radial acceleration value, and/or
- the air gap thickness is taken into consideration indirectly via parameters which influence the air gap thickness.

3. Method according to one of the preceding claims, **characterized in that**
- a or the generator state variable to be set comprises or is an output power (P), a generator torque or an intermediate circuit voltage of an inverter which actuates the generator, and, in particular,
- is set by means of a or the operating characteristic curve in a manner which is dependent on a or the detected rotational speed (n).

4. Method according to one of the preceding claims, **characterized in that**
- the wind power installation (200) is configured as a gearless wind power installation, and/or
- the generator (204) is configured as a permanently excited synchronous generator, and/or
- the generator (204) is configured as an internal rotor.

5. Method according to one of the preceding claims, **characterized in that**
- the control regulation comprises a rotational speed avoidance control operation, in order to control the wind power installation (200) in such a way that an operation of the wind power installation in a rotational speed avoidance range (nᵥ) is avoided, wherein
- the rotational speed avoidance range (nᵥ) defining a rotational speed range in which the operation of the wind power installation is to be avoided, and
- the rotational speed avoidance control operation being selected or set in a manner which is dependent on the air gap thickness, and/or
- the control regulation being selected or set in such a way that the rotational speed avoidance control operation is selected or set in a manner which is dependent on the air gap thickness.

6. Method according to Claim 5, **characterized in that** the rotational speed avoidance control operation controls the wind power installation (200) in such a way that the rotational speed avoidance range (nᵥ) is passed through in the case of decreasing or increasing wind, in order to set an operating point with a rotational speed below or above the rotational speed avoidance range.

7. Method according to one of the preceding claims, **characterized in that**
- the control regulation is selected or set again, in the case of a decreasing air gap thickness, in such a way that
- an or the output power is decreased,
- a or the generator torque is decreased,
and/or
- a or the DC voltage intermediate circuit voltage is increased, and/or that,
- in the case of a decreasing air gap thickness,
- a or the rotational speed avoidance control operation is activated or is set in such a way that an operation of the wind power installation in a rotational speed avoidance range is avoided, and/or
- the rotational speed avoidance control operation is set in such a way that the rotational speed avoidance range is increased, and/or is shifted in the direction of a higher or lower rotational speed.

8. Method according to one of the preceding claims, **characterized in that**
- the control regulation is selected or set in a manner which is dependent on a detected and/or estimated air gap thickness and/or in a manner which is dependent on a generator temperature, and
- is additionally selected or set in a manner which is dependent on at least one boundary condition from the list comprising
- an air density,
- an air pressure,
- an air humidity,
- a wind speed,
- a wind direction,
- a wind shear, and/or
- an atmospheric stratification.

9. Method according to one of the preceding claims, **characterized in that**
a setting regulation is used in order to
- select or set the control regulation
- in a manner which is dependent on a detected and/or estimated air gap thickness and/or
- in a manner which is dependent on a generator temperature and
- in addition in a manner which is dependent on at least one boundary condition,
- the setting regulation specifying the selection or setting of the control regulation in such a way that noise emissions of the wind power installation comply with a predefined noise emissions limit at an emissions point (530).

10. Wind power installation (200), and
- the wind power installation (200) has a generator (204) for the generation of electric current, and
- the generator (204) has an air gap (216) with a variable air gap thickness, wherein
- a control device (103) being provided which is prepared such that the wind power installation (200) is controlled in a part load range by means of a control regulation, and **characterized in that**
- the control device (103) being prepared such that the wind power installation is controlled in a manner which is dependent on the air gap thickness, and
- the control device (103) being prepared in order that the control regulation is selected or set in a manner which is dependent on the air gap thickness, **characterized in that**
- the control regulation (Kᵢ) comprises an operating characteristic curve control operation, in the case of which a generator state variable which is to be set is set by means of an operating characteristic curve (Kᵢ), wherein
- the operating characteristic curve (Kᵢ) specifies a relationship between a detected rotational speed (n) and the generator state variable (P) which is to be set, and
- an operating characteristic curve (Kᵢ) is selected or modified in order to select or set the control regulation.

11. Wind power installation (200) according to Claim 10, **characterized in that** the wind power installation, in particular the control device (103), is prepared to carry out a method according to one of Claims 1 to 9.

12. Wind power installation (200) according to Claim 10 or 11, **characterized in that**
- the wind power installation (200) is configured as a gearless wind power installation, and/or
- the generator (204) is configured as a permanently excited synchronous generator, and/or
- the generator (204) is configured as an internal rotor.

## Revendications

1. Procédé pour commander une éolienne (200),
- l'éolienne (200) présente un générateur (204) pour produire du courant électrique, et
- le générateur (204) présente un entrefer (216) avec une épaisseur d'entrefer variable, dans lequel
- l'éolienne (200) est commandée dans une plage de charge partielle au moyen d'une prescription de commande, **caractérisé en ce que**
- l'éolienne (200) est commandée en fonction de l'épaisseur d'entrefer, et
- la prescription de commande (Kᵢ) est sélectionnée ou réglée en fonction de l'épaisseur d'entrefer, **caractérisé en ce que**
- la prescription de commande (Kᵢ) comprend une commande de courbe caractéristique de fonctionnement, pour laquelle une grandeur d'état de générateur à régler est réglée au moyen d'une courbe caractéristique de fonctionnement (Kᵢ), dans lequel
- la courbe caractéristique de fonctionnement (Kᵢ) indique une corrélation entre une vitesse de rotation (n) détectée et la grandeur d'état de générateur (P) à régler, et
- pour sélectionner ou régler la prescription de commande, une courbe caractéristique de fonctionnement (Kᵢ) est sélectionnée ou modifiée.

2. Procédé selon la revendication 1, **caractérisé en ce que**
pour commander l'éolienne (200) en fonction de l'épaisseur d'entrefer, en particulier pour sélectionner ou régler la prescription de commande (Kᵢ) en fonction de l'épaisseur d'entrefer,
- l'épaisseur d'entrefer est détectée au moyen de capteurs, et/ou
- l'épaisseur d'entrefer est estimée à partir d'au moins une température ou distribution de température détectée, et/ou
- l'épaisseur d'entrefer est estimée à partir d'au moins une valeur d'accélération radiale, et/ou
- l'épaisseur d'entrefer est prise en compte indirectement via les paramètres influençant l'épaisseur d'entrefer.

3. Procédé selon l'une quelconque des revendications précédentes, **caractérisé en ce que**
- une ou la grandeur d'état de générateur à régler comprend ou est une puissance de sortie (P), un couple de générateur ou une tension de circuit intermédiaire d'un onduleur commandant le générateur, et en particulier
- est réglée au moyen d'une ou de la courbe caractéristique de fonctionnement en fonction d'une ou de la vitesse de rotation (n) détectée.

4. Procédé selon l'une quelconque des revendications précédentes, **caractérisé en ce que**
- l'éolienne (200) est réalisée comme une éolienne à entraînement direct et/ou
- le générateur (204) est réalisé comme un générateur synchrone à excitation permanente et/ou
- le générateur (204) est réalisé comme un rotor interne.

5. Procédé selon l'une quelconque des revendications précédentes, **caractérisé en ce que**
- la prescription de commande comporte une commande d'évitement de vitesse de rotation pour commander l'éolienne (200) de sorte qu'un fonctionnement de l'éolienne dans une plage d'évitement de vitesse de rotation (nᵥ) soit évité, dans lequel
- la plage d'évitement de vitesse de rotation (nᵥ) définit une plage de vitesse de rotation dans laquelle le fonctionnement de l'éolienne doit être évité, et
- la commande d'évitement de vitesse de rotation est sélectionnée ou réglée en fonction de l'épaisseur d'entrefer, et/ou
- la prescription de commande est sélectionnée ou réglée de sorte que la commande d'évitement de vitesse de rotation soit sélectionnée ou réglée en fonction de l'épaisseur d'entrefer.

6. Procédé selon la revendication 5, **caractérisé en ce que** la commande d'évitement de vitesse de rotation commande l'éolienne (200) de sorte que la plage d'évitement de vitesse de rotation (nᵥ) en cas de vent décroissant ou croissant est parcourue pour régler un point de fonctionnement avec une vitesse de rotation inférieure ou supérieure à la plage d'évitement de vitesse de rotation.

7. Procédé selon l'une quelconque des revendications précédentes, **caractérisé en ce que**
- la prescription de commande est resélectionnée ou réglée à mesure que l'épaisseur d'entrefer diminue, de sorte que
- une ou la puissance de sortie soit réduite,
- un ou le couple de générateur soit réduit,
et/ou
- une ou la tension de circuit intermédiaire à tension continue est augmentée, et/ou que
- à mesure que l'épaisseur d'entrefer diminue
- une ou la commande d'évitement de vitesse de rotation est activée ou réglée de sorte qu'un fonctionnement de l'éolienne dans une plage d'évitement de vitesse de rotation est évité, et/ou
- la commande d'évitement de vitesse de rotation est réglée de sorte que la plage d'évitement de vitesse de rotation soit augmentée et/ou se déplace vers une vitesse de rotation plus élevée ou plus basse.

8. Procédé selon l'une quelconque des revendications précédentes, **caractérisé en ce que**
- la prescription de commande est sélectionnée ou réglée en fonction d'une épaisseur d'entrefer détectée et/ou estimée et/ou en fonction d'une température de générateur, et
- est en outre sélectionnée ou réglée en fonction d'au moins une condition marginale dans la liste présentant
- une densité de l'air,
- une pression atmosphérique,
- une humidité de l'air,
- une vitesse du vent,
- une direction du vent,
- un cisaillement du vent et/ou
- une stratification atmosphérique.

9. Procédé selon l'une quelconque des revendications précédentes, **caractérisé en ce que**
- pour sélectionner ou régler la prescription de commande
- en fonction d'une épaisseur d'entrefer détectée et/ou estimée et/ou
- en fonction d'une température du générateur et
- en outre en fonction d'au moins une condition marginale,
une prescription de réglage est utilisée, dans lequel
- la prescription de réglage indique la sélection ou le réglage de la prescription de commande de sorte qu'une nuisance sonore de l'éolienne respecte une limite de nuisance sonore prédéfinie à un point de nuisance (530).

10. Éolienne (200) et
- l'éolienne (200) présente un générateur (204) pour produire du courant électrique, et
- le générateur (204) présente un entrefer (216) avec une épaisseur d'entrefer variable, dans laquelle
- un dispositif de commande (103) est prévu, qui est préparé pour commander l'éolienne (200) dans une plage de charge partielle au moyen d'une prescription de commande, et **caractérisée en ce que**
- le dispositif de commande (103) est préparé pour commander l'éolienne en fonction de l'épaisseur d'entrefer, et
- le dispositif de commande (103) est préparé pour que la prescription de commande soit sélectionnée ou réglée en fonction de l'épaisseur d'entrefer, **caractérisée en ce que**
- la prescription de commande (Kᵢ) comprend une commande de courbe caractéristique de fonctionnement pour laquelle une grandeur d'état de générateur à régler est réglée au moyen d'une courbe caractéristique de fonctionnement (Kᵢ), dans laquelle
- la courbe caractéristique de fonctionnement (Kᵢ) indique une corrélation entre une vitesse de rotation (n) détectée et la grandeur d'état de générateur (P) à régler, et
- pour sélectionner ou régler la prescription de commande, une courbe caractéristique de fonctionnement (Kᵢ) est sélectionnée ou modifiée.

11. Éolienne (200) selon la revendication 10, **caractérisée en ce que** l'éolienne, en particulier le dispositif de commande (103), est préparée pour mettre en œuvre un procédé selon l'une quelconque des revendications 1 à 9.

12. Éolienne (200) selon la revendication 10 ou 11, **caractérisée en ce que**
- l'éolienne (200) est réalisée comme une éolienne à entraînement direct et/ou
- le générateur (204) est réalisé comme un générateur synchrone à excitation permanente et/ou
- le générateur (204) est réalisé comme un rotor interne.
